(19)

Europäisches
Patentamt
European
Patent Office
Office européen
des brevets

(11) **EP 4 496 402 A1**

(12) **EUROPEAN PATENT APPLICATION**
published in accordance with Art. 153(4) EPC

(43) Date of publication:
**22.01.2025 Bulletin 2025/04**

(21) Application number: **22931340.8**

(22) Date of filing: **15.03.2022**

(51) International Patent Classification (IPC):
*H04W 72/04* (2023.01)

(52) Cooperative Patent Classification (CPC):
**H04W 72/04**

(86) International application number:
**PCT/CN2022/081037**

(87) International publication number:
**WO 2023/173301 (21.09.2023 Gazette 2023/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **CUI, Shengjiang
Dongguan, Guangdong 523860 (CN)**

(74) Representative: **RGTH
Patentanwälte PartGmbB
Neuer Wall 10
20354 Hamburg (DE)**

(54) **BACKSCATTER COMMUNICATION METHOD, TERMINAL DEVICE, AND NETWORK DEVICE**

(57) The present application relates to a backscatter communication method, a terminal device and a network device. The method includes: determining, by a terminal device, one or more backscatter time domain resources associated with a received first signal; and performing, by the terminal device, backscatter communication based on the one or more backscatter time domain resources. The present application may reduce backscatter communication conflicts and interference problems.

FIG. 3

## Description

### TECHNICAL FIELD

The present application relates to the field of communications, and in particular, to a backscatter communication method, a terminal device, and a network device.

### BACKGROUND

In zero-power communications, with the development of industry, the number of devices connected to the network has increased dramatically, and the number of zero-power devices used in cellular systems will also be huge. In the related art, since the backscatter communication process of the zero-power communication is not effectively controlled, serious backscatter communication conflicts and mutual interference problems may occur.

### SUMMARY

Embodiments of the present application provide a backscatter communication method, a terminal device, and a network device, which may reduce backscatter communication conflicts and interference problems.

Embodiments of the present application provide a backscatter communication method, and the method includes:

determining, by a terminal device, one or more backscatter time domain resources associated with a received first signal; and
performing, by the terminal device, backscatter communication based on the one or more backscatter time domain resources.

Embodiments of the present application provide a backscatter communication method, and the method includes:
sending, by a network device, a first signal on a first signal time domain resource, the first signal being associated with one or more backscatter time domain resources.

Embodiments of the present application provide a terminal device, and the terminal device includes:

a processing module configured to determine one or more backscatter time domain resources associated with a received first signal; and
a backscatter module configured to perform backscatter communication based on the one or more backscatter time domain resources.

Embodiments of the present application provide a network device, and the network device includes:
a sending module configured to send a first signal on a first signal time domain resource, the first signal being associated with one or more backscatter time domain resources.

Embodiments of the present application provide a terminal device, and the terminal device includes a processor and a memory. The memory is configured to store a computer program, and the processor is configured to call and run the computer program stored in the memory to cause the terminal device to perform the backscatter communication method above.

Embodiments of the present application provide a network device, and the network device includes a processor and a memory. The memory is configured to store a computer program, and the processor is configured to call and run the computer program stored in the memory to cause the network device to perform the backscatter communication method above.

Embodiments of the present application provide a chip configured to perform the backscatter communication method above.

Specifically, the chip includes: a processor configured to call and run a computer program from a memory to cause a device equipped the chip to perform the backscatter communication method above.

Embodiments of the present application provide a computer-readable storage medium, and the computer-readable storage medium is configured to store a computer program. The computer program, when executed by a device, causes a device to perform the backscatter communication method.

Embodiments of the present application provide a computer program product, and the computer program product includes computer program instructions. The computer program instructions cause a computer to perform the backscatter communication method above.

Embodiments of the present application provide a computer program, and the computer program, when executed by a computer, causes the computer to perform the backscatter communication method.

In embodiments of the present application, a terminal device determines backscatter time domain resources associated with a received first signal, and performs backscatter communication based on the determined backscatter time domain resources, so as to achieve effective control of the backscatter communication process, thereby reducing backscatter communication conflicts and interference problems.

### BRIEF DESCRIPTION OF THE DRAWINGS

FIG. 1 is a schematic diagram of the principle of zero-power communication.
FIG. 2 is a schematic diagram of the principle of backscatter communication.
FIG. 3 is a schematic flowchart of a backscatter communication method 300, in accordance with an embodiment of the present application.

FIGS. 4A to 4E are each a schematic diagram of a first signal associated with backscatter time domain resource(s), in accordance with embodiments of the present application.

FIGS. 5A to 5E are each a schematic diagram of first signal time domain resources and backscatter time domain resources in a first time domain resource set, in accordance with embodiments of the present application.

FIG. 6A is a schematic diagram 1 of an implementation 1 of an association relationship between first signals and backscatter time domain resources, in accordance with embodiments of the present application.

FIG. 6B is a schematic diagram 2 of an implementation 1 of an association relationship between first signals and backscatter time domain resources, in accordance with embodiments of the present application.

FIG. 6C is a schematic diagram of an implementation 2 of an association relationship between first signals and backscatter time domain resources, in accordance with embodiments of the present application.

FIG. 6D is a schematic diagram of an implementation 3 of an association relationship between first signals and backscatter time domain resources, in accordance with embodiments of the present application.

FIG. 6E is a schematic diagram of an implementation 4 of an association relationship between first signals and backscatter time domain resources, in accordance with embodiments of the present application.

FIG. 6F is a schematic diagram of an implementation 5 of an association relationship between first signals and backscatter time domain resources, in accordance with embodiments of the present application.

FIGS. 7A to 7F are each a schematic diagram of association rules between first signal time domain resources and backscatter time domain resources, in accordance with embodiments of the present application.

FIG. 8 is a schematic flowchart of a backscatter communication method 800, in accordance with an embodiment of the present application.

FIG. 9 is a schematic block diagram of a terminal device, in accordance with an embodiment of the present application.

FIG. 10 is a schematic block diagram of a network device, in accordance with an embodiment of the present application.

FIG. 11 is a schematic block diagram of a communication device, in accordance with embodiments of the present application.

FIG. 12 is a schematic block diagram of a chip, in accordance with embodiments of the present application.

FIG. 13 is a schematic block diagram of a communication system, in accordance with embodiments of the present application.

## DETTAILED DESCRIPTION

Technical solutions in the embodiments of the present application will be described below with reference to the accompanying drawings in the embodiments of the present application.

The technical solutions in the embodiments of the present application may be applied to a zero-power communication system. A typical zero-power device is a radio frequency identification (RFID) device, which based on a technology that uses spatial coupling of wireless radio frequency signals to achieve automatic transmission and identification of information of contactless tag. RFID tags are also referred to as radio frequency tags or electronic tags. The types of electronic tags may be divided into an active electronic tag, a passive electronic tag and a semi-passive electronic tag according to different power supply methods. The active electronic tag, also known as a self-motivated electronic tag, refers to an active electronic tag with the working power provided by a battery and composed of the battery, a memory and an antenna together. Different from the passive radio frequency activation manner, the active electronic tag sends information through a set frequency band before the battery is replaced. The passive electronic tag, also known as an inactive electronic tag, does not support built-in batteries. When the passive electronic tag approaches a reader/writer, the tag is located within a near field formed by radiation of an antenna of the reader/-writer. An antenna of the electronic tag generates an induced current through electromagnetic induction, and the induced current drives a chip circuit of the electronic tag. The chip circuit sends identification information stored in the tag to the reader/writer through the antenna of the electronic tag. The semi-active electronic tag inherits advantages of small size, light weight, low price and long service life of the passive electronic tag. The built-in battery only provides power for a small number of circuits in the chip when there is no reader/writer access. Only when the reader/writer accesses, the built-in battery supplies power to the RFID chip, so as to increase the reading and writing distance of the tag and improve the reliability of communication.

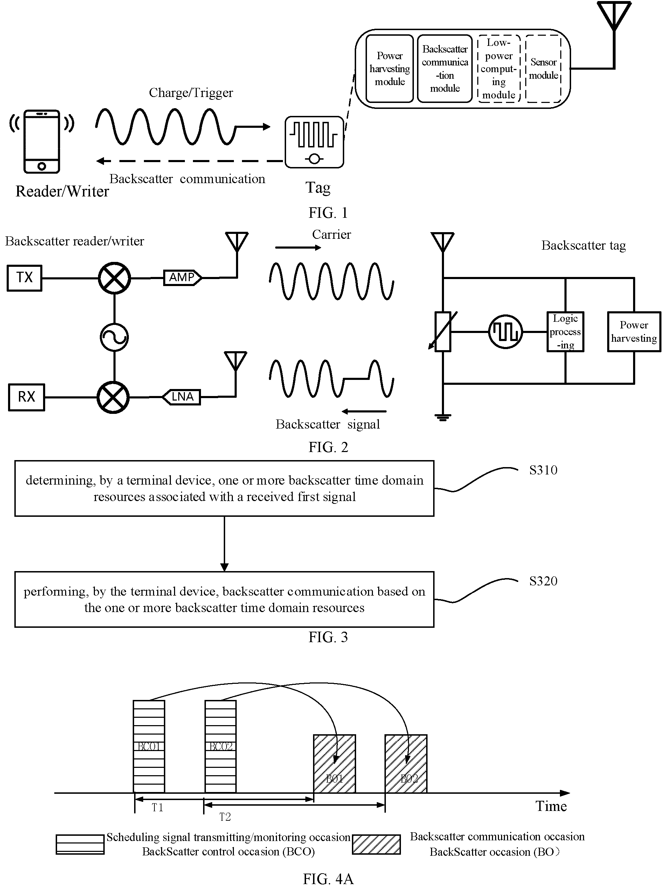

RFID is a wireless communication technology. The most basic RFID system consists of two parts: an electronic tag (TAG) and a reader/writer (Reader/Writer). The electronic tag is composed of a coupling component and a chip. Each electronic tag has a unique electronic code that is placed on a target to be measured to achieve the purpose of marking the target object. The reader/-writer can not only read the information on the electronic tag, but also write the information on the electronic tag, and provide the electronic tag with the power required for communication at the same time. FIG. 1 is a schematic diagram of the principle of zero-power communication.

As shown in FIG. 1, an electronic tag receives a radio frequency signal sent by a reader/writer after entering the electromagnetic field. A passive electronic tag or an inactive electronic tag sends out the information stored in the electronic tag by using the power obtained from the electromagnetic field generated in the space. The reader/writer reads the information and performs decoding, thereby identifying the electronic tag.

The key technologies of zero-power communication include power harvesting and backscatter communication as well as low-power computing. As shown in FIG. 1, a typical zero-power communication system includes a reader/writer and a zero-power terminal. The reader/writer sends radio waves to provide power for the zero-power terminal. A power harvesting module installed in the zero-power terminal may harvest the power carried by radio waves in space (the radio waves are emitted by the reader/writer shown in FIG. 1) to drive a low-power computing module in the zero-power terminal and realize backscatter communication. After the zero-power terminal obtains power, the zero-power terminal may receive control commands from the reader/writer and send data to the reader/writer by means of backscatter based on the control signaling. The data sent may come from data stored in the zero-power terminal itself (e.g., an identifier, or pre-written information such as a production date of a product, a brand, and a manufacturer). The zero-power terminal may also be loaded with various types of sensors to report the data collected by various types of sensors based on the zero-power mechanism.

FIG. 2 is a schematic diagram of the principle of backscatter communication. As shown in FIG. 2, a zero-power device (a backscatter tag in FIG. 2) receives a carrier signal sent by a backscatter reader/writer, harvests the power through a power harvesting module, and further controls the function of a low-power processing module (a logic processing module in FIG. 2), modulates incoming signals, and performs backscatter. The main characteristics of the backscatter communication are as follows:

(1) A terminal does not actively send signals, but modulates incoming signals to achieve backscatter communication;
(2) A terminal does not rely on a traditional active power amplifier transmitter and uses low-power computing units, greatly reducing hardware complexity; and
(3) Combined with power harvesting, battery-free communication may be achieved.

The power supply signal in the zero-power communication system, from the perspective of the power supply signal carrier, may be carried by a base station, a smart phone, a smart gateway, a charging station, a micro base station, etc.; from the perspective of the frequency band, the radio waves used as the power supply signal may be low-frequency, medium-frequency, high-frequency and other radio waves; from the perspective of the waveform, the radio waves used as the power supply signal may be sine waves, square waves, triangular waves, pulse waves, rectangular waves and other radio waves. In addition, the functional signal may be a continuous wave or a discontinuous wave (i.e., with a certain period of interruption allowed). The power supply may be a certain signal specified in the 3GPP standard, such as Sounding Reference Signal (SRS), Physical Uplink Shared Channel (PUSCH), Physical Random Access Channel (PRACH), Physical Uplink Control Channel (PUCCH), Physical Downlink Control Channel (PDCCH), Physical Downlink Shared Channel (PDSCH), or Physical Broadcast Channel (PBCH).

The trigger signal in the zero-power communication system, from the perspective of the trigger signal carrier, may be carried by a base station, a smart phone, a smart gateway, etc.; from the perspective of the frequency band, the radio waves used as the trigger signal may be low-frequency, medium-frequency, high-frequency and other radio waves; from the perspective of the waveform, the radio waves used as the trigger signal may be sine waves, square waves, triangular waves, pulse waves, rectangular waves and other radio waves. In addition, the trigger signal may be a continuous wave or a discontinuous wave (i.e., with a certain period of interruption allowed). The trigger signal may be a certain signal specified in the 3GPP standard, such as SRS, PUSCH, PRACH, PUCCH, PDCCH, PDSCH, or PBCH, alternatively, it may be a new signal.

It should be understood that the terms "system" and "network" herein are often used interchangeably herein. The term "and/or" herein is merely an association relationship for describing associated objects, and indicates that three relationships may exist. For example, "A and/or B" may represent: A alone, both A and B, and B alone. In addition, the character "/" herein generally indicates that associated objects before and after this character is in an "or" relationship.

It should be understood that the term "indicate" mentioned in the embodiments of the present application may mean a direct indication or an indirect indication, or represent that there is an association relationship. For example, the description of "A indicating B" may mean that A directly indicates B (e.g., B may be obtained through A); or it may mean that A indirectly indicates B (e.g., A indicates C, and B may be obtained through C); or it may mean that there is an association relationship between A and B.

The term "correspond" described in the embodiments of the present application may mean that there is a relationship of direct correspondence or indirect correspondence between the two, or there is a relationship of association between the two, or there is a relationship of indicating and being indicated, or configuring and being configured, or the like.

In the embodiments of the present application, each embodiment is described in conjunction with a terminal device and a network device. The network device may be a device used for communicating with a mobile device. The network device may be an access point (AP) in WLAN, a base station (base transceiver station, BTS) in GSM or CDMA, a base station (NodeB, NB) in WCDMA, an evolutional base station (evolutional Node B, eNB or eNodeB) in LTE, a relay station or an access point, an in-vehicle device, a wearable device, a network device (e.g., gNB) in an NR network, or a network device in a future evolutional PLMN network, or the like.

In the embodiments of the present application, a network device provides services for a cell, and a terminal device communicates with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cell here may include a metro cell, a micro cell, a pico cell, a femto cell, or the like. These small cells have the characteristics of small coverage and low transmission power, and are suitable for providing high-speed data transmission services.

In the embodiments of the present application, a terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user device, or the like. The terminal device may be a station (ST) in WLAN, which may be a cellular phone, a cordless phone, a session initiation protocol (SIP) phone, a wireless local loop (WLL) station, a personal digital assistant (PDA) device, a handheld device with a wireless communication function, a computing device or one of other processing devices connected to a wireless modem, an in-vehicle device, a wearable device, a terminal device in a next-generation communication system (e.g., a terminal device in an NR network or a terminal device in a future evolutional public land mobile network (PLMN)), a zero-power device, or the like.

As an example but not limitation, in the embodiments of the present application, the terminal device may be a wearable device. The wearable device may also be referred to as a wearable smart device, which is a general term for wearable devices developed by performing intelligent design on daily wear (such as glasses, a glove, a watch, clothing, or shoes) using wearable technology. The wearable device is a portable device that is worn directly on a body or is integrated into a user's clothing or accessory. The wearable device is not merely a hardware device, and achieves powerful functions through software support, data interaction and cloud interaction. Generalized wearable smart devices include a full- functionality and large-sized device (such as a smart watch or smart glasses) that may realize complete or partial functionality without relying on smart phones, and a device (such as various smart bracelets or smart jewelries for monitoring physical signs) that focus on a certain type of application functionality only and need to be used in conjunction with other devices (such as smart phones).

It should be understood that a zero-power device may be understood as a device with a power consumption lower than a preset power consumption. For example, the zero-power device includes a passive terminal and even a semi-passive terminal.

For example, the zero-power device is a radio frequency identification (RFID) tag, which based on a technology that uses spatial coupling of wireless radio frequency signals to achieve automatic transmission and identification of information of the contactless tag. RFID tags are also called radio frequency tags or electronic tags. The types of electronic tags may be divided into an active electronic tag, a passive electronic tag and a semi-passive electronic tag according to different power supply methods. The active electronic tags, also known as a self-motivated electronic tag, refers to an active tag with the working power provided by a battery and composed of the battery, a memory and an antenna together. Different from the passive radio frequency activation manner, the active electronic tag sends information through a set frequency band before the battery is replaced. The passive electronic tag, also known as an inactive electronic tag, does not support built-in batteries. When the passive electronic tag approaches a reader/writer, the tag is located within a near field formed by radiation of an antenna of the reader/writer. An antenna of the electronic tag generates an induced current through electromagnetic induction, and the induced current drives a chip circuit of the electronic tag. The chip circuit sends the identification information stored in the tag to the reader/-writer through the antenna of the electronic tag. The semi-passive electronic tag, also known as a semi-active electronic tag, inherits the advantages of small size, light weight, low price and long service life of the passive electronic tag. The built-in battery only provides power for a small number of circuits in the chip when there is no reader/writer access. Only when the reader/writer accesses, the built-in battery supplies power to the RFID chip, so as to increase the reading and writing distance of the tag and improve the reliability of communication.

The RFID system is a wireless communication system. The RFID system consists of two parts: an electronic tag (TAG) and a reader/writer (Reader/Writer). The electronic tag includes a coupling component and a chip. Each electronic tag has a unique electronic code that is placed on a target to be measured to achieve the purpose of marking the target object. The reader/writer can not only read the information on the electronic tag, but also write the information on the electronic tag, and provide the electronic tag with the power required for communication at the same time.

It should be understood that the above-mentioned terminal device may be a zero-power device (such as a passive terminal or even a semi-passive terminal), and even the terminal device may be a non-zero-power device, such as an ordinary terminal, but the ordinary terminal may perform backscatter communication in some cases.

To facilitate understanding of the technical solutions in the embodiments of the present application, the related art of the embodiments of the present application will be described below. The following related art, as an optional solution, may be arbitrarily combined with the technical solutions in the embodiments of the present application, and those combined solutions all belong to the protection scope of the embodiments of the present application.

In the zero-power communication, with the development of industry, the number of devices connected to the network has increased dramatically, and the number of zero-power devices used in cellular systems will also be huge. In some typical scenarios such as logistics and warehousing management, supermarket shopping, and industrial sensor networks, a large number of tags need to be connected.

Since the zero-power communication process is not controlled in the related art, serious backscatter communication conflicts and mutual interference problems may occur. For example, when a zero-power terminal device (which may be referred to as a terminal device for short) receives a scheduling signal, it is uncertain at what moment to perform backscatter communication, which may cause conflicts and mutual interference between the backscatter communication signals sent by all zero-power terminal devices. The embodiments of the present application provide a method for associating a scheduling signal (or scheduling signal time domain resources) with backscatter (or backscatter time domain resources) in signal zero-power communication for triggering or scheduling backscatter communication, which facilitates control over the zero-power communication process by the network device.

FIG. 3 is a schematic flowchart of a backscatter communication method 300 in accordance with an embodiment of the present application. The method may optionally be applied to the systems shown in FIG. 1 and FIG. 2, but is not limited thereto. The method includes at least part of the following:

> S310: determining, by a terminal device, one or more backscatter time domain resources associated with a received first signal; and
> S330: performing, by the terminal device, backscatter communication based on the one or more backscatter time domain resources.

In some implementations, the first signal has at least one of the following functions:

> triggering backscatter communication;
> scheduling backscatter communication; and

carrying indicating information of the time domain resource(s) for performing backscatter communication.

In zero-power communication, since a zero-power terminal device (hereinafter referred to as the terminal device for short) is not powered by a battery, power harvesting is required first, where the power used for communication may be obtained based on a radio frequency signal, or based on environmental energy (such as kinetic energy, thermal energy, solar energy). Then, the corresponding communication process is carried out based on backscatter.

Typically, when the power harvesting is performed based on the radio frequency signal, the signal for power harvesting may be provided by a network device or a dedicated power node, and the signal for power harvesting will hereinafter be referred to as a power supply signal.

When communication is performed based on scheduling, the network device needs to provide control information to schedule information transmission. The control information provided by the network device may be the first signal mentioned above; and the first signal may also be referred to as a scheduling signal or a trigger signal. The first signal and the power supply signal may be the same signal or two independent signals. When the terminal device communicates, a carrier capable of carrying the communication is required. The carrier may be a signal independent of the power supply signal and the first signal, or may be the same signal as the power supply signal, or may be the same signal as the first signal. The carrier may also be called a carrier signal.

The frequency bands of the power supply signal, the carrier signal, and the first signal may be completely different, completely identical, or partially identical. The power supply signal may be transmitted continuously or intermittently in a certain frequency band. The terminal device uses the power supply signal to perform power harvesting, and after obtaining power, performs the corresponding communication process (such as measurement, channel/signal reception, or channel/signal transmission).

In zero-power communication, the power harvesting capabilities of different terminal devices may be different. For the same power source (which may be a network device, a base station, a smart terminal, a smart gateway, a dedicated power supply node, or the like), different terminal devices are located at different positions. Since the power supply signal is attenuated, the power supply signal has different powers when reaching different positions. Therefore, it may take different terminal devices different times to obtain the powers required for communication through power harvesting.

The embodiments of the present application provide a time domain resource design and mapping relationship between a first signal and a backscatter communication signal in zero-power communication.

In the embodiments of the present application, a time domain resource used to carry a first signal is referred to as a first signal time domain resource or a scheduling signal time domain resource, and a resource used to carry a backscatter communication signal is referred to as a backscatter time domain resource.

It can be seen from the above content in the embodiments of the present application that when receiving a first signal, the terminal device determines backscatter time domain resource(s) associated with the first signal, and performs backscatter communication on the backscatter time domain resource(s), thereby realizing control over the time domain resource(s) occupied by backscatter communication and greatly reducing the problems of backscatter communication conflicts and mutual interference.

It will be noted that in the embodiments of the present application, the zero-power terminal may perform power harvesting, and then monitor the first signal and perform the backscatter communication process; alternatively, the zero-power terminal may perform power harvesting based on the first signal, and then perform the backscatter communication process.

In an implementation, the first signal time domain resources may specifically be first signal transmitting occasions, or referred to as backscatter control occasions (BCO). The backscatter time domain resources may specifically be backscatter communication occasions, or referred to as backscatter occasions (BO) for short.

The embodiments of the present application may at least realize two association modes of a first signal (or a first signal time domain resource) and backscatter (or backscatter time domain resource(s)). The two association modes include: Mode 1 in which each first signal is associated with one or more backscatter communication occasions; and Mode 2 in which a first signal is associated with backscatter communication occasion(s) configured based on a first time domain resource set. The above two modes are respectively introduced below with reference to the accompanying drawings.

Mode 1

In this mode, each first signal is associated with one or more backscatter communication occasions. The first signal time domain resources (such as the first signal transmitting occasions) and the backscatter time domain resources (such as backscatter communication occasions) are not limited themselves and do not need to be located at specific locations in time domain resources. The network device may dynamically send a first signal. The backscatter time domain resources may be uplink time domain resources or downlink time domain resources or flexible time domain resources used for other channel communications in new radio (NR).

The first signal may have at least one of the following functions:

triggering backscatter communication;
scheduling backscatter communication; and
carrying indicating information of the time domain resource(s) for performing backscatter communication.

Taking an example where the first signal is a scheduling signal and the first signal time domain resource is a scheduling signal time domain resource specifically, FIG. 4A is a schematic diagram of a scheduling signal (or a scheduling signal time domain resource) associated with backscatter time domain resources in accordance with an embodiment of the present application. In FIG. 4A, the description is made by taking an example where the scheduling signal time domain resource is specifically a scheduling signal transmitting/-monitoring occasion and the backscatter time domain resource is specifically a backscatter communication occasion. FIG. 4A shows two scheduling signal transmitting occasions, namely BCO1 and BCO2; and each scheduling signal transmitting occasion is associated with a backscatter communication occasion, for example, BCO1 is associated with BO1, and BCO2 is associated with BO2.

BCO1 and BCO2 are dynamically selected by the network device when the network device sends the scheduling signals. The terminal device monitors a scheduling signal on any time domain resource. For example, when the terminal device monitors and receives the scheduling signal on BCO1, according to the association relationship between BCO1 and the backscatter communication occasion, it can be determined that the backscatter communication occasion associated with BCO1 is BO1. The terminal device may then perform backscatter communication on BO1 for the scheduling signal, for example, send a backscatter communication signal. Accordingly, if the network device sends the scheduling signal on BCO1, the network device can determine that the backscatter communication occasion associated with BCO1 is BO1 according to the association relationship between BCO1 and the backscatter communication occasion. Then the network device will monitor the backscatter communication on BO1, and when monitoring and receiving the backscatter communication signal on BO1, the network device will process the backscatter communication signal.

In some implementations, the terminal device may determine the one or more backscatter time domain resources associated with the received first signal according to at least one of the following:

a starting point of a backscatter time domain resource;
a first signal time domain resource where the first signal is located;
a time domain offset;
a duration of a backscatter time domain resource;
a format of the first signal;

the number of backscatter time domain resource(s) associated with the first signal; and

an interval between two adjacent backscatter time domain resources associated with the first signal.

Based on at least one of the above information, the terminal device may determine the one or more backscatter time domain resources associated with the received first signal. The backscatter time domain resource(s) may be after the first signal time domain resource where the first signal is located; alternatively, the backscatter time domain resource(s) may be after the first signal time domain resource where the first signal is located or overlap with the location of the first signal time domain resource where the first signal is located.

In some implementations, the terminal device may determine the one or more backscatter time domain resources associated with the first signal through a starting point of the backscatter time domain resource(s). For example, a plurality of backscatter time domain resources are pre-configured in a time domain, and the terminal device determines, based on the starting point of the backscatter time domain resources, one or more backscatter time domain resources starting from the starting point as the backscatter time domain resource(s) associated with the first signal. The network device may use the first signal to indicate the starting point of the backscatter time domain resource(s) to the terminal device, or may use other signals to indicate the starting point of the backscatter time domain resource(s) to the terminal device. Furthermore, the terminal device may also determine one or more backscatter time domain resources associated with the first signal according to the duration of the backscatter time domain resource. Specifically, the starting point of the backscatter communication occasion or the duration of the backscatter time domain resource may be specified by a protocol; and/or the starting point of the backscatter communication occasion or the duration of the backscatter time domain resource may be configured by the network device. For example, the network device may perform configuration through the first signal.

In some implementations, the first signal is associated with one backscatter time domain resource or a plurality of backscatter time domain resources.

For example, an association relationship between the first signal and the backscatter time domain resource may be determined through a time domain offset.

Taking FIG. 4A as an example, BCO1 (or a first signal sent on BCO1) is associated with BO1, and the association relationship is determined by a time domain offset of BO1 relative to BCO1 (such as T1 in FIG. 4A). If the terminal device receives the first signal on BCO1, the specific location of BO1 associated with BCO1 can be determined according to the time domain offset T1, and backscatter communication is performed on BO1. Similarly, if the network device sends the first signal on BCO1, the specific location of BO1 associated with BCO1 may also be determined according to the time domain offset T1, and the backscatter communication is monitored on BO1. Furthermore, the terminal device may also determine backscatter time domain resource(s) associated with the first signal according to the duration of the backscatter time domain resource, for example, determining a time duration of BO1 associated with BCO1 in FIG. 4A. Specifically, the time domain offset or the duration of the backscatter time domain resource may be specified by a protocol; and/or the time domain offset or the duration of the backscatter time domain resource may be configured by the network device. For example, the network device may perform configuration through the first signal.

For another example, an association relationship between the first signal and the plurality of backscatter time domain resources may be determined by one or more time domain offsets.

In some implementations, in a case where an association relationship between the first signal and a plurality of backscatter time domain resources may be determined by a plurality of time domain offsets, each time domain offset is used to determine a backscatter time domain resource associated with the first signal.

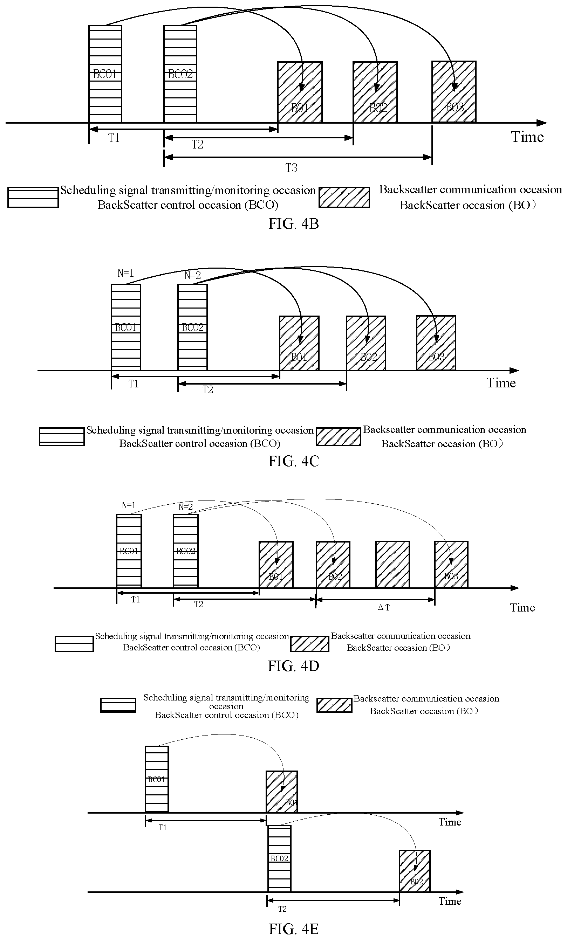

Taking FIG. 4B as an example, BCO2 (or a first signal sent on BCO2) is associated with BO2 and BO3, and the two association relationships are respectively determined by a time domain offset of BO2 relative to BCO2 (such as T2 in FIG. 4B) and a time domain offset of BO3 relative to BCO2 (such as T3 in FIG. 4B). If the terminal device receives the first signal on BCO2, specific locations of BO2 and BO3 associated with BCO2 can be determined according to the time domain offsets T2 and T3, and backscatter communication is performed on BO2 and/or BO3. Similarly, if the network device sends the first signal on BCO2, the specific locations of BO2 and BO3 associated with BCO2 may also be determined according to the time domain offsets T2 and T3, and the backscatter communication is monitored on BO2 and/or BO3. Furthermore, the terminal device may also determine the backscatter time domain resources associated with the first signal according to the duration of the backscatter time domain resources, for example, determining the time durations of BO2 and BO3 associated with BCO2 in FIG. 4B. Specifically, the plurality of time domain offsets or the durations of the backscatter time domain resources may be specified by a protocol; and/or the plurality of time domain offsets or the durations of the backscatter time domain resources may be configured by the network device. For example, the network device may perform configuration through the first signal.

In some implementations, an association relationship between the first signal and a plurality of backscatter time domain resources may be determined by a time domain offset and the number of the backscatter time domain resources associated with the first signal.

Taking FIG. 4C as an example, BCO2 (or a first signal sent on BCO2) is associated with two backscatter time domain resources (e.g., the number N of the backscatter time domain resources corresponding to BCO2 in FIG. 4C is equal to 2 (N=2)), and the first backscatter time domain resource (such as BO2 in FIG. 4C) associated with BCO2 is determined by a time domain offset (such as T2 in FIG. 4C) of BO2 relative to BCO2. Since a plurality of backscatter time domain resources are pre-configured in the time domain, if the terminal device receives the first signal on BCO2, the specific location of the first backscatter time domain resource (i.e., BO2) associated with BCO2 can be determined according to the time domain offset T2; and according to the number N being equal to 2 (N=2), it can be determined that starting from BO2, there are 2 backscatter time domain resources associated with BCO2, namely including BO2 and BO3. Thus, the terminal device may monitor the backscatter communication on BO2 and/or BO3. Furthermore, the terminal device may also determine the backscatter time domain resources associated with the first signal based on the duration of the backscatter time domain resource, for example, determining the time durations of BO2 and BO3 associated with BCO2 in FIG. 4C. Specifically, the time domain offset, the number of the backscatter time domain resources associated with the first signal, or the duration of the backscatter time domain resource may be specified by a protocol; and/or the time domain offset, the number of the backscatter time domain resources associated with the first signal, or the duration of the backscatter time domain resource may be configured by the network device. For example, the network device may perform configuration through the first signal.

In some implementations, an association relationship between the first signal and a plurality of backscatter time domain resources is determined by a time domain offset, the number of the backscatter time domain resources associated with the first signal, and an interval between two adjacent backscatter time domain resources associated with the first signal.

Taking FIG. 4D as an example, BCO2 (or a first signal sent on BCO2) is associated with two backscatter time domain resources (e.g., the number N of the backscatter time domain resources corresponding to BCO2 in FIG. 4D is equal to 2 (N=2)), and the first backscatter time domain resource (such as BO2 in FIG. 4D) associated with BCO2 is determined by a time domain offset (such as T2 in FIG. 4D) of BO2 relative to BCO2. If the terminal device receives the first signal on BCO2, the specific location of the first backscatter time domain resource (i.e., BO2) associated with BCO2 can be determined according to the time domain offset T2; and then the specific location of the second backscatter time domain resource (such as BO3 in FIG. 4D) associated with the first signal is determined based on the specific location of BO2 and an interval (such as ΔT in FIG. 4D) between two adjacent backscatter time domain resources associated with the first signal. Thus, the terminal device may monitor the backscatter communication on BO2 and/or BO3. Furthermore, the terminal device may also determine the backscatter time domain resources associated with the first signal based on the duration of the backscatter time domain resource, for example, determining the time durations of BO2 and BO3 associated with BCO2 in FIG. 4D. Specifically, the time domain offset, the number of the backscatter time domain resources associated with the first signal, the interval between two adjacent backscatter time domain resources associated with the first signal, or the duration of the backscatter time domain resource may be specified by a protocol; and/or the time domain offset, the number of the backscatter time domain resources associated with the first signal, the interval between two adjacent backscatter time domain resources associated with the first signal, or the duration of the backscatter time domain resource may be configured by the network device. For example, the network device may perform configuration through the first signal.

In addition, for a case where backscatter time domain resources are periodically configured in the time domain, an interval between two adjacent backscatter time domain resources associated with the first signal in this embodiment may be expressed as a multiple of the period of the backscatter time domain resources configured in the time domain. For example, the value of ΔT in FIG. 4D may be 2, which means that one of every two backscatter time domain resources in the time domain is selected as the backscatter time domain resource associated with the first signal. Alternatively, in a case where backscatter time domain resources are not periodically configured, configuration may be made by ΔT=2, which means that one of every two backscatter time domain resources in the time domain is selected as the backscatter time domain resource associated with the first signal. Of course, the time interval between BO2 and BO3 may be directly taken as the value of ΔT in FIG. 4D.

As shown in FIG. 4D, BCO1 and BCO2 may be dynamically selected by the network device when sending the first signal. The terminal device monitors the first signal on any time domain resource. For example, when the terminal device monitors and receives the first signal on BCO1, according to the association relationship between BCO1 and the backscatter communication occasion, it can be determined that the backscatter communication occasion associated with BCO1 is BO1. Then, the terminal device may perform backscatter communication for the first signal on BO1, for example, sending a backscatter communication signal. Accordingly, if the network device sends the first signal on BCO1, the network device can determine that the backscatter communication occasion associated with BCO1 is BO1 according to the association relationship between BCO1 and the backscatter communication occasion. Then, the network device will monitor the backscatter communication on BO1, and when the backscatter communication signal is monitored and received on BO1, the network device will process the backscatter communication signal. For another example, when the terminal device monitors and receives the first signal on BCO2, according to the association relationship between BCO2 and the backscatter communication occasions, it can be determined that the backscatter communication occasions associated with BCO2 are BO2 and BO3. The terminal device may then select BO2 or BO3 for backscatter communication, or perform backscatter communication on both BO2 and BO3. Accordingly, if the network device sends the first signal on BCO2, the network device can determine that the backscatter communication occasions associated with BCO2 are BO2 and BO3 according to the association relationship between BCO2 and the backscatter communication occasions, and then the network device can monitor the backscatter communication on BO2 and/or BO3.

In some implementations, for all first signals, at least one of time domain offsets, the numbers of associated backscatter time domain resources, and intervals each between adjacent backscatter time domain resources may be configured uniformly, i.e., each first signal is configured with at least one of the same time domain offset, the same number of associated backscatter time domain resources, and the same interval between adjacent backscatter time domain resources; alternatively,

in some implementations, for all first signals, at least one of time domain offsets, the numbers of associated backscatter time domain resources, and intervals each between adjacent backscatter time domain resources may be configured uniformly by groups, i.e., each first signal in the same group (e.g., in the same time domain resource set) is configured with at least one of the same time domain offset, the same number of associated backscatter time domain resources, and the same interval between adjacent backscatter time domain resources; alternatively,

in some implementations, for all first signals, at least one of time domain offsets, the numbers of associated backscatter time domain resources, and intervals each between adjacent backscatter time domain resources may be configured independently for each first signal, i.e., each first signal may independently configure at least one of the time domain offset, the number of associated backscatter time domain resources, and the interval between adjacent backscatter time domain resources.

Alternatively, in some implementations, the number of the backscatter time domain resources associated with a scheduling signal may be determined according to the format of the scheduling signal.

For example, a format of a first signal includes at least one of a first format, a second format, and a third format, where

a first signal in the first format is associated with one or more backscatter time domain resources;

a first signal in the second format is associated with a backscatter time domain resource; and
a first signal in the third format is associated with a plurality of backscatter time domain resources.

When the terminal device receives the first signal, it may determine the number of backscatter time domain resources associated with the first signal according to the format of the first signal, and determine the backscatter time domain resources associated with the first signal in combination with the above-mentioned other information.

In some implementations, one or more backscatter time domain resources associated with the first signal received by the terminal device are located after a scheduling signal time domain resource where the received first signal is located, and/or overlap with the location of the first signal time domain resource where the received scheduling signal is located. For example, the backscatter communication occasion(s) associated with the first signal may be located after the first signal transmitting occasion, and/or located at the same location as the first signal transmitting occasion.

In some implementations, the first signal time domain resource where the first signal received by the terminal device is located is allowed to overlap with one or more backscatter time domain resources associated with another first signal; alternatively,
the first signal time domain resource where the received first signal is located is not allowed to overlap with one or more backscatter time domain resources associated with another first signal.

As shown in FIG. 4E, FIG. 4E is another schematic diagram of a first signal (or a first signal time domain resource) associated with backscatter time domain resource in accordance with embodiments of the present application. In FIG. 4E, the scheduling signal transmitting occasion BCO1 is associated with the backscatter communication occasion BO1, and the scheduling signal transmitting occasion BCO2 is associated with the backscatter communication occasion BO2. BO1 may overlap or partially overlap with BCO2.

In some implementations, the unit of the time domain offset includes: microseconds, milliseconds, seconds, OFDM symbols, time slots, subframes, frames, or basic time units of backscatter communication.

In some implementations, the time domain offset includes an offset from a first reference point to a second reference point; where

the first reference point may be associated with a received first signal; and
the second reference point may be associated with a backscatter time domain resource.

Specifically, the first reference point may include at least one of a starting point of a received first signal, an end point of a received first signal, a starting point of a time unit where a received first signal is located, and an end point of a time unit where a received first signal is located.

Specifically, the second reference point may include at least one of a starting point of a backscatter time domain resource, an end point of a backscatter time domain resource, a starting point of a time unit where a backscatter time domain resource is located, and an end point of a time unit where a backscatter time domain resource is located.

The time unit may include orthogonal frequency division multiplexing (OFDM) symbols, time slots, subframes, frames or basic time units of backscatter communication.

In some implementations, time domain offsets corresponding to all first signals are configured uniformly or independently. For example, the time domain offsets corresponding to all first signals are configured uniformly, and the time domain offsets corresponding to all first signals are the same; alternatively, the time domain offsets corresponding to all first signals are configured independently, and the time domain offsets corresponding to all first signals may be the same or different.

In some implementations, backscatter time domain resources associated with different scheduling signals are completely identical, completely different, or partially identical.

In some implementations, durations of different backscatter time domain resources are the same or different.

The above introduces the association mode 1 of the first signal (or the first signal time domain resource) and the backscatter (or the backscatter time domain resource(s)), that is, the association mode of each first signal associated with one or more backscatter communication occasions, and a backscatter communication method of the terminal device in this mode. Embodiments of the present application further provides an association mode 2 of the first signal (or the first signal time domain resource) and the backscatter (or the backscatter time domain resource(s)), and details are as follows.

Mode 2

In this mode, an association between a first signal and backscatter communication occasion(s) based on a first time domain resource set is provided. Compared with the above Mode 1, the Mode 2 is more standardized and may semi-statically configure a first signal transmitting occasion and a backscatter communication occasion in a first time domain resource. The network device can only send a scheduling signal at the first signal transmitting occasion in the first time domain resource.

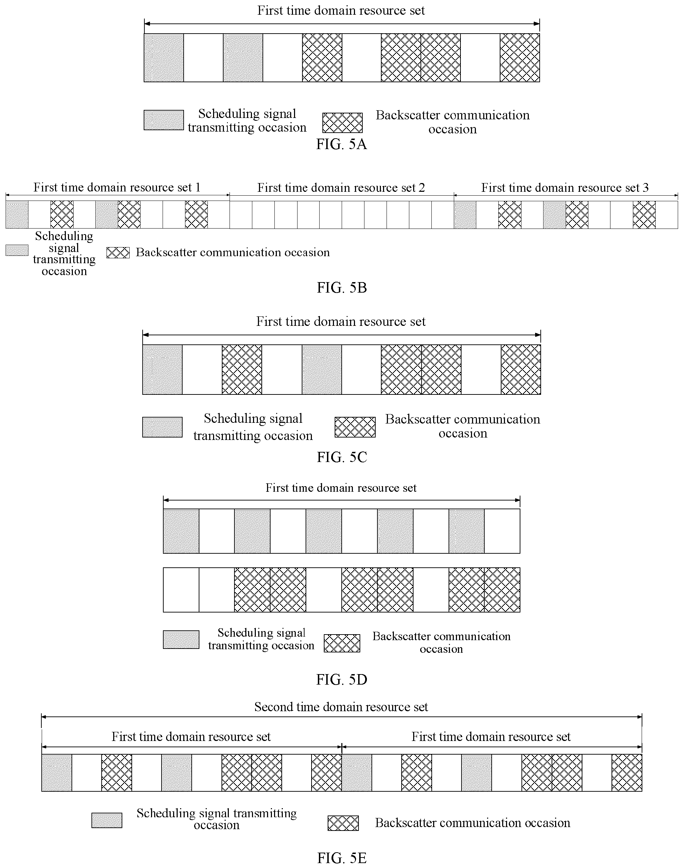

FIG. 5A is a schematic diagram of first signal time domain resources and backscatter time domain resources in a first time domain resource set in accordance with embodiments of the present application. In FIG. 5A, the description is made by taking an example where the first signal time domain resource is specifically a scheduling signal transmitting occasion and the backscatter time domain resource is specifically a backscatter communication occasion. FIG. 5A shows a first time domain resource set, and the first time domain resource set includes a plurality of basic communication units. In some implementations, the basic communication unit may be a component unit of a first time domain resource set, and the first time domain resource set may be determined based on the number of the basic communication units and/or the time duration of the basic communication unit. A part of basic communication units in the first time domain resource set may be used as scheduling signal transmitting occasions for transmission of first signals; and another part of basic communication units may be used as backscatter communication occasions for transmission of backscatter signals. The first time domain resource set may further include some blank basic communication units that neither transmit the first signal nor transmit the backscatter signal.

When designing zero-power communication, basic communication units of the zero-power communication may be defined. The first time domain resource set may be determined based on the number of basic communication units of zero-power communication or based on an absolute time duration (such as microseconds, milliseconds, or seconds).

Specifically, the first time domain resource set may include one or more first signal time domain resources, such as one or more scheduling signal transmitting occasions; and the first time domain resource set may include one or more backscatter time domain resources, such as one or more backscatter communication occasions.

The network device may pre-configure location information of first signal time domain resources and/or backscatter time domain resources in the first time domain resource set. Accordingly, the terminal device receives location information of first signal time domain resources and/or backscatter time domain resources in the first time domain resource set, and the location information may include the starting location and/or duration.

In some implementations, first time domain resource sets include first-type first time domain resource sets and second-type first time domain resource sets, the first-type first time domain resource set is a first time domain resource set including first signal time domain resources and/or backscatter time domain resources, and the second-type first time domain resource set is a first time domain resource set including neither first signal time domain resources nor backscatter time domain resources;

accordingly, the location information of the first signal time domain resources and/or the backscatter time domain resources in the first time domain resource set may include:

distribution information of the first signal time domain resources and/or the backscatter time domain resources in the first-type first time domain resource set; and/or

periodic distribution information of the first-type first time domain resource sets and the second-type first time domain resource sets, each period including at least one first-type first time domain resource set and/or at least one second-type first time domain resource set.

The description is made by taking FIG. 5B as an example. FIG. 5B is a schematic diagram of scheduling signal time domain resources and backscatter time domain resources in another first time domain resource set in accordance with embodiments of the present application. In FIG. 5B, the description is made by taking an example where the scheduling signal time domain resource is specifically a scheduling signal transmitting occasion and the backscatter time domain resource is specifically a backscatter communication occasion. A first time domain resource set 1 and a first time domain resource set 3 belong to the above-mentioned first-type first time domain resource sets, and the first time domain resource set 1 and the first time domain resource set 3 each include the scheduling signal transmitting occasions and the backscatter communication occasions. A first time domain resource set 2 belongs to the above-mentioned second-type first time domain resource set, and the first time domain resource set 2 includes neither scheduling signal transmitting occasions nor backscatter communication occasions. It can be seen from FIG. 5B that the first-type first time domain resource sets and the second-type first time domain resource sets are periodically distributed, each period includes one first-type first time domain resource set and one second-type first time domain resource set, and the first-type first time domain resource sets in different periods have the same distribution. In a first-type first time domain resource set (such as the first time domain resource set 1 or the first time domain resource set 2), backscatter communication occasions are distributed periodically, that is, one backscatter communication occasion appears in every three basic communication units.

Distribution information of first signal time domain resources and/or backscatter time domain resources included in a first time domain resource set may be represented by a pattern, and the patterns of different first time domain resource sets may be the same or different.

In some implementations, all first signal time domain resources in the first time domain resource set are before any backscatter time domain resource in the first time domain resource set; alternatively,

there is a first signal time domain resource in the first time domain resource set that is located after a backscatter time domain resource in the first time domain resource set; alternatively,

there is a first signal time domain resource and a backscatter time domain resource, that occupy the same basic communication unit, in the first time domain resource set.

For example, in a case where first signal transmitting occasions and backscatter communication occasions exist simultaneously in a first time domain resource set, the first signal transmitting occasions may all be located before an xth basic communication unit (or called basic time unit) in the first time domain resource set, and the backscatter communication occasions may all be located after a yth (y>=x) basic time unit in the first time domain resource set. In other words, all first signal transmitting occasions are located before all backscatter communication occasions, where x and y are indexes of the basic time units. This method may be seen in detail in FIG. 5A.

For another example, in a case where both signal transmitting occasions and backscatter communication occasions exist simultaneously in a first time domain resource set, there is a case where a first signal transmitting occasion is located after a backscatter communication occasion, that is, it is not required that all first signal transmitting occasions are located before all backscatter communication occasions. As shown in FIG. 5C, the second first signal transmitting occasion in the first time domain resource set is located after a backscatter communication occasion.

For another example, as shown in FIG. 5D, in the first time domain resource set shown in FIG. 5D, some first signal transmitting occasions and some backscatter communication occasions occupy the same basic communication units.

In some implementations, backscatter time domain resources associated with different first signal time domain resources may be completely identical, completely different, or partially identical.

In some implementations, different first signal time domain resources in the same first time domain resource set are allowed to transmit the same first signal.

Embodiments of the present application may also configure a second time domain resource set, and the second time domain resource set may include a plurality of first time domain resource sets.

In some implementations, the number of first time domain resource sets in a second time domain resource set may be specified by a protocol or configured by a network device. Specifically, the network device may configure the number of the first time domain resource sets in the second time domain resource set through the first signal or other signals.

First time domain resource sets included in a second time domain resource set may all be first-type first time domain resource sets;

alternatively, first time domain resource sets included in a second time domain resource set may be first-type first time domain resource sets or second-type first time domain resource sets; in other words, the second time domain resource set may include a plurality of consecutive first time domain resource sets.

As shown in FIG. 5E, a second time domain resource set includes two consecutive first time domain resource sets. A first time domain resource set included in the second time domain resource set may be the above-mentioned first-type first time domain resource set and/or the second-type first time domain resource set.

In some implementations, the terminal device monitors the first signal on a first time domain resource set.

The association relationship between the first signal and backscatter time domain resources can be realized in at least the following modes.

Mode 1:

the first signal is associated with all backscatter time domain resources in a first time domain resource set that are located after the first signal; alternatively, the first signal is associated with all backscatter time domain resources in a first time domain resource set that are located after the first signal and overlap with the first signal; alternatively, the first signal is associated with all backscatter time domain resources in a second time domain resource set that are located after the first signal; alternatively, the first signal is associated with all backscatter time domain resources in a second time domain resource set that are located after the first signal and overlap with the first signal.

Accordingly, in some implementations, the terminal device determining one or more backscatter time domain resources associated with the received first signal, includes:

determining, by the terminal device, all backscatter time domain resources in a first time domain resource set that are located after the first signal, and using, by the terminal device, the determined backscatter time domain resources as the one or more backscatter time domain resources associated with the first signal; alternatively, determining, by the terminal device, all backscatter time domain resources in a first time domain resource set that are located after the first signal and overlap with the first signal, and using, by the terminal device, the determined backscatter time domain resources as the one or more backscatter time domain resources associated with the first signal.

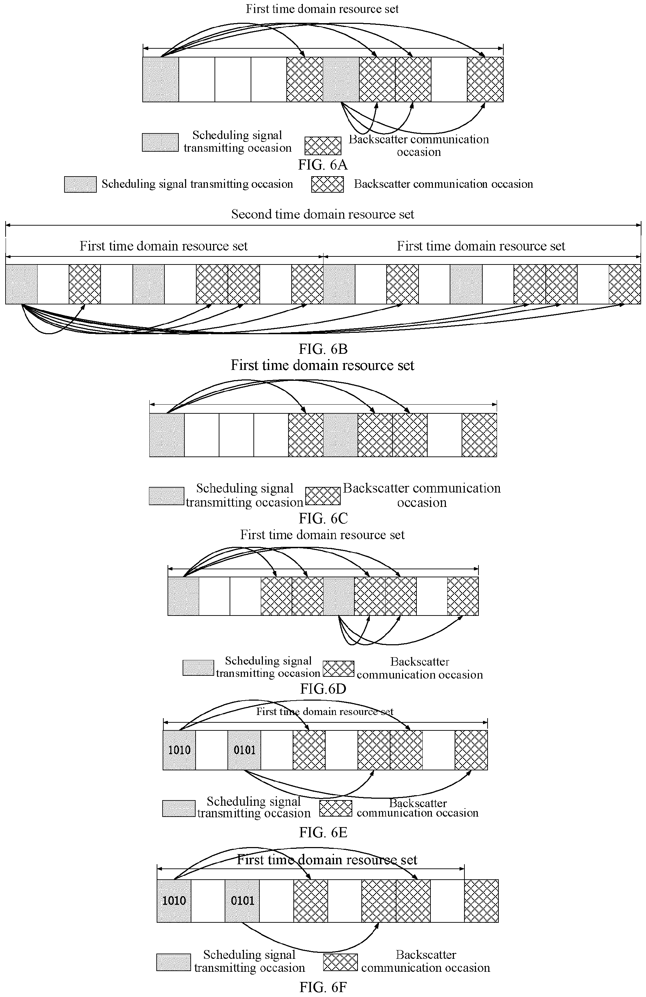

Taking FIG. 6A as an example, FIG. 6A is a schematic diagram 1 of an implementation 1 of an association relationship between first signals and backscatter time domain resources in accordance with embodiments of the present application. In FIG. 6A, the description is made by taking an example where the first signal time domain resources are specifically scheduling signal transmitting occasions, and the backscatter time domain resources are specifically backscatter communication occasions. As shown in FIG. 6A, when the terminal device receives the first signal on a first scheduling signal transmitting occasion in a first time domain resource set shown in FIG. 6A, the terminal device may determine that all backscatter communication occasions in the first time domain resource set that are located after the first signal are backscatter communication occasions associated with the first signal, and the terminal device may use some or all of these associated backscatter time domain resources for backscatter communication. Alternatively, the terminal device may determine that all backscatter communication occasions in the first time domain resource set that are located after the first signal and overlap with the first signal are backscatter communication occasions associated with the first signal. Accordingly, the network device may also use the same method to determine backscatter time domain resources associated with the first signal, and monitor the backscatter signal sent by the terminal device on some or all of these backscatter time domain resources.

Alternatively, in some implementations, the terminal device determining one or more backscatter time domain resources associated with the received first signal, includes:

determining, by the terminal device, all backscatter time domain resources in a second time domain resource set that are located after the first signal, and using, by the terminal device, the determined backscatter time domain resources as the one or more backscatter time domain resources associated with the first signal; alternatively, determining, by the terminal device, all backscatter time domain resources in a second time domain resource set that are located after the first signal and overlap with the first signal, and using, by the terminal device, the determined backscatter time domain resources as the one or more backscatter time domain resources associated with the first signal; where the second time domain resource set includes a plurality of first time domain resource sets. The specific features have been described above and are not repeated here.

Taking FIG. 6B as an example, FIG. 6B is a schematic diagram 2 of an implementation 1 of an association relationship between first signals and backscatter time domain resources in accordance with embodiments of the present application. In FIG. 6B, the description is made by taking an example where the first signal time domain resources are specifically scheduling signal transmitting occasions, and the backscatter time domain resources are specifically backscatter communication occasions. As shown in FIG. 6B, when the terminal device receives the first signal on a first scheduling signal transmitting occasion in a second time domain resource set shown in FIG. 6B, the terminal device may determine that all backscatter communication occasions in the second time domain resource set that are located after the first signal are backscatter communication occasions associated with the first signal, and the terminal device may use some or all of these associated backscatter time domain resources for backscatter communication. Alternatively, the terminal device may determine that all backscatter communication occasions in the second time domain resource set that are located after the first signal and overlap with the first signal are backscatter communication occasions associated with the first signal. Accordingly, the network device may also use the same method to determine backscatter time domain resources associated with the first signal, and monitor the backscatter signal sent by the terminal device on some or all of these backscatter time domain resources.

It can be seen from the examples shown in FIG. 6A and FIG. 6B that, the implementation 1 of the association relationship does not specifically limit the number of the backscatter time domain resources associated with the first signal, but limits the locations of the backscatter time domain resources associated with the first signal.

Mode 2:

the first signal is associated with N1 backscatter time domain resource(s) located after the first signal; alternatively,
the first signal is associated with N1 backscatter time domain resource(s) that are not located before the first signal (including those that are located after the first signal and overlap with the first signal), where N1 is a positive integer.

Accordingly, in some implementations, the terminal device determining one or more backscatter time domain resources associated with the received first signal, includes:

determining, by the terminal device, N1 backscatter time domain resource(s) meeting a first condition, and using, by the terminal device, the determined backscatter time domain resource(s) as the backscatter time domain resource(s) associated with the first signal; the N1 is a positive integer; where the first condition includes:

the backscatter time domain resource being located after the first signal; alternatively,
the backscatter time domain resource being located after the first signal or overlapping with the first signal.

Taking FIG. 6C as an example, FIG. 6C is a schematic diagram of an implementation 2 of an association relationship between first signals and backscatter time domain resources in accordance with embodiments of the present application. In FIG. 6C, the description is made by taking an example where the first signal time domain resources are specifically the scheduling signal transmitting occasions, and the backscatter time domain resources are specifically the backscatter communication occasions. In the example shown in FIG. 6C, the first signal is associated with three backscatter time domain resources, that is, N1=3. The terminal device receives the first signal on a first scheduling signal transmitting occasion in the first time domain resource set shown in FIG. 6C, and determines three backscatter communication occasions after the first signal as the backscatter communication occasions associated with the first signal. Alternatively, the terminal device may determine three backscatter communication occasions that are located after the first signal or overlap with the first signal. Accordingly, the network device may also use the same method to determine three backscatter communication occasions associated with the first signal, and monitor the backscatter signal sent by the terminal device on these backscatter communication occasions.

It can be seen from the example shown in FIG. 6C that, the implementation 2 of the association relationship limits the number of the backscatter time domain resources associated with the first signal.

In some implementations, the above N1 is a preset value; alternatively, N1 is configured by the network device.

Specifically, the N1 may be configured by the network device using the first signal or other signals.

Mode 3

In mode 3, both the number of the backscatter time domain resources associated with the first signal and the locations of the backscatter time domain resources associated with the first signal may be limited. For example, a first signal is limited to be associated with at most N2 backscatter time domain resources. In a case where the number of the backscatter time domain resources meeting the location condition is greater than or equal to N2, it can be determined that the first signal is associated with N2 backscatter time domain resources. In a case where the number of the backscatter time domain resources meeting the aforementioned location condition is less than N2, it is determined that the first signal is associated with L (L is the number of the backscatter time domain resources meeting the aforementioned location condition) backscatter time domain resources.

Accordingly, in some implementations, the terminal device determining one or more backscatter time domain resources associated with the received first signal, includes:

determining, by the terminal device, N2 or less backscatter time domain resource(s) meeting a second condition (which may be the aforementioned location condition), and using, by the terminal device, the determined backscatter time domain resource(s) as the backscatter time domain resource(s) associated with the first signal; N2 being a positive integer; where

in a case where the number of the backscatter time domain resources meeting the second condition is greater than or equal to N2, the terminal device uses the N2 backscatter time domain resources meeting the second condition as the backscatter time domain resources associated with the first signal; or

in a case where the number of the backscatter time domain resources meeting the second condition is less than N2, the terminal device uses all backscatter time domain resources meeting the second condition as the backscatter time domain resources associated with the first signal.

In some implementations, the second condition above may include:

a backscatter time domain resource being located within the first time domain resource set where the first signal is located and located after the first signal; or

a backscatter time domain resource being located within the first time domain resource set where the first signal is located and located after the first signal or overlapping with the first signal.

In some other implementations, the second condition above may include:

a backscatter time domain resource being located within a second time domain resource set to which the first time domain resource set where the first signal is located belongs, and located after the first signal; or

a backscatter time domain resource being located within a second time domain resource set to which the first time domain resource set where the first signal is located belongs, and located after the first signal or overlapping with the first signal.

Taking FIG. 6D as an example, FIG. 6D is a schematic diagram of an implementation 3 of an association relationship between first signals and backscatter time domain resources in accordance with embodiments of the present application. In FIG. 6D, the description is made by taking an example where the first signal time domain resources are specifically the scheduling signal transmitting occasions, and the backscatter time domain resources are specifically the backscatter communication occasions. In the example shown in FIG. 6D, the first signal is associated with four backscatter time domain resources, i.e., N2=4, and the backscatter communication occasions associated with the first signal need to meet a condition of being located within the first time domain resource set where the first signal is located and located after the first signal.

For example, the terminal device receives the first signal on a first scheduling signal transmitting occasion in the first time domain resource set shown in FIG. 6D, and determines that four backscatter communication occasions after the first signal are the backscatter communication occasions associated with the first signal (there are 5 backscatter communication occasions within the first time domain resource set and after the first signal, and subject to the limitation of N2=4, the terminal device selects the first 4 backscatter communication occasions as the backscatter communication occasions associated with the first signal).

For another example, the terminal device receives the first signal on a second scheduling signal transmitting occasion in the first time domain resource set shown in FIG. 6D, and since there are 3 backscatter communication occasions that are located after the first signal in the first time domain resource set, the terminal device uses these 3 backscatter communication occasions as the backscatter communication occasions associated with the first signal.

In some implementations, the above N2 is a preset value; alternatively, N2 is configured by the network device.

Specifically, the N2 may be configured by the network device using the first signal or other signals.

Mode 4

In ode 4, the backscatter time domain resources associated with the first signal may be limited by using an association rule.

Accordingly, in some implementations, the terminal device determining one or more backscatter time domain resources associated with the received first signal, includes:

determining, by the terminal device, N3 backscatter time domain resource(s) satisfying the association rule, and using, by the terminal device, the determined backscatter time domain resource(s) as the backscatter time domain resource(s) associated with the first signal; where N3 is the number of the backscatter time domain resources that are associated with the first signal time domain resource where the first signal is located, and N3 is indicated by the association rule.

The above association rule may be preset, or configured by the network device. For example, the network device may configure the association rule using the first signal.

In some implementations, the association rule may be represented by a bitmap.

Taking FIG. 6E as an example, FIG. 6E is a schematic diagram of an implementation 4 of an association relationship between first signals and backscatter time domain resources in accordance with embodiments of the present application. In FIG. 6E, the description is made by taking an example where the first signal time domain resources are specifically the scheduling signal transmitting occasions, and the backscatter time domain resources are specifically the backscatter communication occasions. In the example shown in FIG. 6E, an association rule of a first scheduling signal transmitting occasion in the first time domain resource set shown in FIG. 6E is represented by a bitmap "1010", and each bit in the bitmap corresponds to a backscatter communication occasion in the first time domain resource set. When a bit value corresponding to a backscatter communication occasion is "1", it indicates that the backscatter communication occasion is associated with the first scheduling signal transmitting occasion; and when a bit value corresponding to a backscatter communication occasion is "0", it indicates that the backscatter communication occasion is not associated with the first scheduling signal transmitting occasion. Of course, the meanings of the bit values "1" and "0" may be reversed.

For example, the terminal device receives the first signal on the first scheduling signal transmitting occasion in the first time domain resource set shown in FIG. 6E. According to the association rule (represented by the bitmap "1010") of the first scheduling signal transmitting occasion, 2 backscatter communication occasions associated with the first scheduling signal transmitting occasion may be determined, that is, N3 (N3=2) backscatter communication occasions that satisfy the association relationship (i.e., the first and third backscatter communication occasions in FIG. 6E) may be determined. The determined backscatter communication occasions are used as the backscatter communication occasions associated with the first signal.

Mode 5

In mode 5, not only may the backscatter time domain resources associated with the first signal be limited by using the association rule, but also the locations of the backscatter time domain resources associated with the first signal are limited. For example, limiting the use of association rule to determine the backscatter time domain resources associated with the first signal. When the number of the backscatter communication occasion(s) that satisfy the association rule is greater than or equal to N3, it may be determined that the first signal is associated with N3 backscatter time domain resource(s); and when the number of the backscatter communication occasion(s) that satisfy the association rule is less than N3, it may be determined that the first signal is associated with L (L is the number of the backscatter time domain resources that satisfy the association rule) backscatter time domain resources. N3 is the number of the backscatter time domain resources indicated by the association rule and associated with the first signal time domain resource where the first signal is located.

Accordingly, in some implementations, the terminal device determining one or more backscatter time domain resources associated with the received first signal, includes:

determining, by the terminal device, N3 or less backscatter time domain resources satisfying the association rule, and using, by the terminal device, the determined backscatter time domain resources as the backscatter time domain resources associated with the first signal; where N3 is the number of the backscatter time domain resources associated with the first signal time domain resource where the first signal is located, and N3 is indicated by the association rule.

The above location limitation may be that the backscatter communication occasions associated with the first signal are limited to be within the first time domain resource set where the first signal is located, or the backscatter communication occasions associated with the first signal are limited to be within the second time domain resource set where the first signal is located.

In some implementations, in a case where the number of backscatter time domain resources satisfying the association rule in the first time domain resource set is greater than or equal to N3, the terminal device uses the N3 backscatter time domain resource(s) satisfying the association rule as the backscatter time domain resource(s) associated with the first signal; and in a case where the number of backscatter time domain resources satisfying the association rule in the first time domain resource set is less than N3, the terminal device uses all backscatter time domain resources satisfying the association rule as the backscatter time domain resources associated with the first signal.

Alternatively, in some implementations, in a case where the number of backscatter time domain resources satisfying the association rule in a second time domain resource set to which the first time domain resource set belongs is greater than or equal to N3, the terminal device uses the N3 backscatter time domain resource(s) satisfying the association rule as the backscatter time domain resource(s) associated with the first signal; and in a case where the number of backscatter time domain resources satisfying the association rule in a second time domain resource set to which the first time domain resource set belongs is less than N3, the terminal device uses all backscatter time domain resources satisfying the association rule as the backscatter time domain resources associated with the first signal.

In some implementations, the association rule may be preset or configured by the network device. For example, the network device may configure the association rule using the first signal.

The association rule may be represented by a bitmap.

Taking FIG. 6F as an example, FIG. 6F is a schematic diagram of an implementation of an association relationship between first signals and backscatter time domain resources in accordance with embodiments of the present application. In FIG. 6F, the description is made by taking an example where the first signal time domain resources are specifically the scheduling signal transmitting occasions, and the backscatter time domain resources are specifically the backscatter communication occasions. In the example shown in FIG. 6F, an association rule of a first scheduling signal transmitting occasion in the first time domain resource set shown in FIG. 6F is represented by a bitmap "1010", and each bit in the bitmap corresponds to a backscatter communication occasion. When a bit value corresponding to a backscatter communication occasion is "1", it indicates that the backscatter communication occasion is associated with the first scheduling signal transmitting occasion; and when a bit value corresponding to a backscatter communication occasion is "0", it indicates that the backscatter communication occasion is not associated with the first scheduling signal transmitting occasion.

For example, the terminal device receives the first signal on the first scheduling signal transmitting occasion in the first time domain resource set shown in FIG. 6F. The association rule of the first scheduling signal transmitting occasion in the first time domain resource set shown in FIG. 6F is represented by a bitmap "1010", which indicates that the first and third backscatter communication occasions after the first scheduling signal transmitting occasion satisfy the association rule. In addition, the first and third backscatter communication occasions after the first scheduling signal transmitting occasion are both located in the first time domain resource set where the first signal is located, therefore, the terminal device determines that these two backscatter communication occasions are the backscatter communication occasions associated with the first signal.

For another example, the terminal device receives the first signal on the second scheduling signal transmitting occasion in the first time domain resource set shown in FIG. 6F. The association rule of the second scheduling signal transmitting occasion in the first time domain resource set shown in FIG. 6F is represented by a bitmap "0101", which indicates that the second and fourth backscatter communication occasions after the second scheduling signal transmitting occasion satisfy the association rule. Further, as shown in FIG. 6F, the second backscatter communication occasion after the second scheduling signal transmitting occasion is located in the first time domain resource set where the second signal is located, and the fourth backscatter communication occasion after the second scheduling signal transmitting occasion is located outside the first time domain resource set where the second signal is located. Therefore, the terminal device determines that the second backscatter communication occasion after the second scheduling signal transmitting occasion is the backscatter communication occasion associated with the first signal.

In the above-mentioned mode 4 and mode 5, an association rule is adopted to represent the backscatter time domain resources that are associated with the first signal time domain resource. The association rule may be represented by a bitmap. The embodiments of the present application provide an expressing method of a plurality of association rules.

For example, in some implementations, a bitmap includes M1 bits. Each bit corresponding to X1 backscatter time domain resources or X1 basic communication units in the first time domain resource set where the first signal time domain resource is located; alternatively, one bit of the bitmap corresponds to Y1 backscatter time domain resources or Y1 basic communication units in the first time domain resource set where the first signal time domain resource is located, and each bit in the remaining bits of the bitmap corresponds to X1 backscatter time domain resources or X1 basic communication units in the first time domain resource set where the first signal time domain resource is located. The relationship between M1 and X1 satisfies M1=T1/X1, $M1=\lceil T1/X1 \rceil$, or $M1=\lfloor T1/X1 \rfloor$, where T1 represents the number of backscatter time domain resources or the number of basic communication units satisfying the third condition in the first time domain resource set where the first signal time domain resource is located.

In some implementations, the third condition may include:

being located at any location in the first time domain resource set where the first signal time domain resource is located; alternatively

being located in the first time domain resource set where the first signal time domain resource is located and after the first signal time domain resource; alternatively

being located in the first time domain resource set where the first signal time domain resource is located, and located after the first signal time domain resource or overlapping with the first signal time domain resource.

In some implementations, the bitmap includes M2 bits, and each bit corresponds to X2 basic communication units or X2 backscatter time domain resources; X2 or M2 is a positive integer.

In some implementations, the bitmap includes M3 bits. Each bit corresponds to X3 backscatter time domain resources or X3 basic communication units; alternatively, one bit of the bitmap corresponds to Y3 backscatter time domain resources or Y3 basic communication units, and each bit in the remaining bits of the bitmap corresponds to X3 backscatter time domain resources or X3 basic communication units. The relationship between M3 and X3 satisfies M3=T3/X3, $M3=\lceil T3/X3 \rceil$, or $M3=\lfloor T3/X3 \rfloor$, where T3 repre-

sents the number of backscatter time domain resources or the number of basic communication units satisfying a fourth condition in the K first time domain resource sets, and K is a positive integer.

In some implementations, T3 represents the number of backscatter time domain resources or the number of basic communication units satisfying the fourth condition in the K consecutive first time domain resource sets;

alternatively, T3 represents the number of backscatter time domain resources or the number of basic communication units satisfying the fourth condition in K consecutive first time domain resource sets containing backscatter time domain resources.

The fourth condition mentioned above may include:

being located at any location in the K first time domain resource sets; alternatively,

being located in the K first time domain resource sets and located after the first signal time domain resource; alternatively,

being located in the K first time domain resource sets and located after the first signal time domain resource or overlapping with the first signal time domain resource.

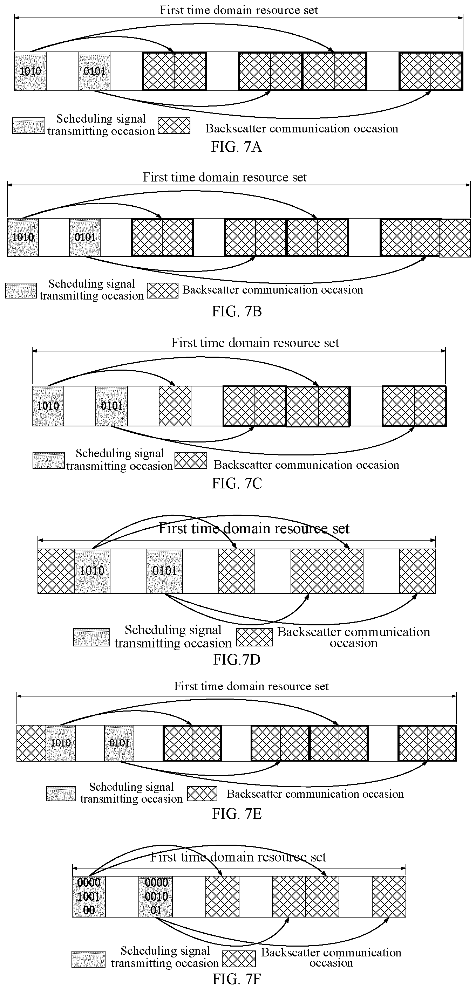

In addition to the association rule shown in FIG. 6E, embodiments of the present application also provide an expressing method of a plurality of association rules. FIGS. 7A to 7F are each a schematic diagram of association rules between first signal time domain resources and backscatter time domain resources in accordance with embodiments of the present disclosure.

In FIG. 7A, the first signal time domain resource is specifically a scheduling signal transmitting occasion, and the backscatter time domain resource is specifically a backscatter communication occasion. As shown in FIG. 7A, the first time domain resource set includes 8 backscatter communication occasions. For any scheduling signal transmitting occasion in the first time domain resource set, a bitmap with a length of 4 bits may be used to represent whether each backscatter communication occasion in the first time domain resource set is associated with the scheduling signal transmitting occasion, and one bit thereof is used to indicate 2 backscatter communication occasions in the first time domain resource set. For example, when a value of any bit is 1, it indicates association; and when a value of any bit is 0, it indicates no association. Alternatively, it may be set that a value of 1 indicates no association and a value of 0 indicates association. For example, the serial numbers of the eight backscatter communication occasions in the first time domain resource set are 1, 2, 3, 4, 5, 6, 7, and 8. The first bit in the bitmap corresponds to a backscatter communication occasion 1 and a backscatter communication occasion 2, the second bit in the bitmap corresponds to a backscatter communication occasion 3 and a backscatter communication occasion 4, the third bit in the bitmap corresponds to a backscatter communication occasion 5 and a backscatter communication occasion 6, and the fourth bit in the bitmap corresponds to a backscatter communication occasion 7 and a backscatter communication occasion 8. It can be seen that the minimum unit in the association relationship is two backscatter communication occasions.

As shown in FIG. 7A, in the first time domain resource set of FIG. 7A, the bitmap "1010" is used to represent the backscatter communication occasions associated with the first scheduling signal transmitting occasion in the first time domain resource set, that is, the backscatter communication occasion 1, the backscatter communication occasion 2, the backscatter communication occasion 5, and the backscatter communication occasion 6 in the first time domain resource set are associated with the first scheduling signal transmitting occasion, and the remaining backscatter communication occasions in the first time domain resource set are not associated with the first scheduling signal transmitting occasion. Similarly, "0101" is used to indicate that the backscatter communication occasion 3, the backscatter communication occasion 4, the backscatter communication occasion 7, and the backscatter communication occasion 8 in the first time domain resource set are associated with the second scheduling signal transmitting occasion, and the remaining backscatter communication occasions in the first time domain resource set are not associated with the second scheduling signal transmitting occasion.

Taking FIG. 7B as an example, in FIG. 7B, the first signal time domain resource is specifically a scheduling signal transmitting occasion, and the backscatter time domain resource is specifically a backscatter communication occasion. As shown in FIG. 7B, the first time domain resource set includes 9 backscatter communication occasions. For any scheduling signal transmitting occasion in the first time domain resource set, if a bitmap with a length of 4 bits is used to indicate whether each backscatter communication occasion in the first time domain resource set is associated with the scheduling signal transmitting occasion, then each of 3 bits thereof may be used to indicate 2 backscatter communication occasions in the first time domain resource set, and the remaining one bit may be used to indicate 3 backscatter communication occasions in the first time domain resource set. It can be seen that in the bitmap of the embodiment, there is a special bit which indicates the number of backscatter communication occasions different from that indicated by other bits; the location of the special bit may be preset, for example, the first bit, the last bit, or a characteristic at another preset location in the bitmap is used as the special bit. When a value of any bit is 1, it indicates association; and when a value of any bit is 0, it indicates no association. Alternatively, it may be set that a value of 1 indicates no association and a value of 0 indicates association.

In FIG. 7B, the serial numbers of the 9 backscatter communication occasions in the first time domain resource set are 1, 2, 3, 4, 5, 6, 7, 8, and 9; the bitmap includes 4 bits, and the fourth bit is used as the abovementioned special bit, that is, the first bit corresponds to a backscatter communication occasion 1 and a backscatter communication occasion 2, the second bit in the bitmap corresponds to a backscatter communication occasion 3 and a backscatter communication occasion 4, the third bit in the bitmap corresponds to a backscatter communication occasion 5 and a backscatter communication occasion 6, and the fourth bit in the bitmap corresponds to a backscatter communication occasion 7, a backscatter communication occasion 8, and a backscatter communication occasion 9.

As shown in FIG. 7B, in the first time domain resource set of FIG. 7B, the bitmap "1010" is used to represent the backscatter communication occasions associated with the first scheduling signal transmitting occasion in the first time domain resource set, that is, a backscatter communication occasion 1, a backscatter communication occasion 2, a backscatter communication occasion 5, and a backscatter communication occasion 6 in the first time domain resource set are associated with the first scheduling signal transmitting occasion, and the remaining backscatter communication occasions in the first time domain resource set are not associated with the first scheduling signal transmitting occasion. Similarly, "0101" is used to indicate that a backscatter communication occasion 3, a backscatter communication occasion 4, a backscatter communication occasion 7, a backscatter communication occasion 8, and a backscatter communication occasion 9 in the first time domain resource set are associated with the second scheduling signal transmitting occasion, and the remaining backscatter communication occasions in the first time domain resource set are not associated with the second scheduling signal transmitting occasion. It can be seen that in the embodiment shown in FIG. 7B, the number of bitmaps (the value is 4 in this example) is equal to a value rounding down the first ratio of the number (9 in this example) of backscatter time domain resources in the first time domain resource set to the number (2 in this example) of backscatter time domain resources indicated by each of bits in the bitmap except the special bit.

Taking FIG. 7C as an example, in FIG. 7C, the first time domain resource is specifically a scheduling signal transmitting occasion, and the backscatter time domain resource is specifically a backscatter communication occasion. As shown in FIG. 7C, the first time domain resource set includes 7 backscatter communication occasions. For any scheduling signal transmitting occasion in the first time domain resource set, if a bitmap with a length of 4 bits is used to indicate whether each backscatter communication occasion in the first time domain resource set is associated with the scheduling signal transmitting occasion, then each of 3 bits thereof may be used to indicate 2 backscatter communication occasions in the first time domain resource set, and the remaining 1 bit may be used to indicate 1 backscatter communication occasion in the first time domain resource set. It can be seen that in the bitmap of the embodiment, there is a special bit which indicates the number of backscatter communication occasions different from that indicated by other bits; the location of the special bit may be preset, for example, the first bit, the last bit, or a characteristic at another preset location in the bitmap is used as the special bit. When a value of any bit is 1, it indicates association; and when a value of any bit is 0, it indicates no association. Alternatively, it may be set that a value of 1 indicates no association and a value of 0 indicates association.

In FIG. 7C, the serial numbers of the 7 backscatter communication occasions in the first time domain resource set are 1, 2, 3, 4, 5, 6, and 7; the bitmap includes 4 bits, and the first bit is used as the above-mentioned special bit, that is, the first bit corresponds to a backscatter communication occasion 1, the second bit in the bitmap corresponds to a backscatter communication occasion 2 and a backscatter communication occasion 3, the third bit in the bitmap corresponds to a backscatter communication occasion 4 and a backscatter communication occasion 5, and the fourth bit in the bitmap corresponds to a backscatter communication occasion 6 and a backscatter communication occasion 7.

As shown in FIG. 7C, in the first time domain resource set of FIG. 7C, the bitmap "1010" is used to represent the backscatter communication occasions associated with the first scheduling signal transmitting occasion in the first time domain resource set, that is, a backscatter communication occasion 1, a backscatter communication occasion 4, and a backscatter communication occasion 5 in the first time domain resource set are associated with the first scheduling signal transmitting occasion, and the remaining backscatter communication occasions in the first time domain resource set are not associated with the first scheduling signal transmitting occasion. Similarly, "0101" is used to indicate that a backscatter communication occasion 2, a backscatter communication occasion 3, a backscatter communication occasion 6, and a backscatter communication occasion 7 in the first time domain resource set are associated with the second scheduling signal transmitting occasion, and the remaining backscatter communication occasions in the first time domain resource set are not associated with the second scheduling signal transmitting occasion. It can be seen that in the embodiment shown in FIG. 7C, the number of bitmaps (the value is 4 in this example) is equal to a value rounding up the first ratio of the number (7 in this example) of backscatter time domain resources in the first time domain resource set to the number (2 in this example) of backscatter time domain resources indicated by each of bits in the bitmap except the special bit.

Taking FIG. 7D as an example, in FIG. 7D, the first signal time domain resource is specifically a scheduling signal transmitting occasion, and the backscatter time domain resource is specifically a backscatter communication occasion. As shown in FIG. 7D, in the first time domain resource set of FIG. 7D, there are 4 backscatter communication occasions after the first scheduling signal transmitting occasion, and then a bitmap with a length of 4 bits may be used for the first scheduling signal transmitting occasion to indicate whether each backscatter communication occasion after the first scheduling signal transmitting occasion is associated with the first scheduling signal transmitting occasion. Similarly, in the first time domain resource set of FIG. 7D, there are also 4 backscatter communication occasions after the second scheduling signal transmitting occasion, and then a bitmap with a length of 4 bits may also be used for the second scheduling signal transmitting occasion to indicate whether each backscatter communication occasion after the second scheduling signal transmitting occasion is associated with the second scheduling signal transmitting occasion. Each backscatter communication occasion in this figure occupies one basic time unit. In other embodiments, a backscatter communication occasion may occupy a plurality of basic time units. In other embodiments, the numbers of basic time units occupied by all backscatter communication occasions may be the same or different.

Similar to FIG. 7A, a bit in the bitmap may be used to indicate whether at least two backscatter communication occasions after the scheduling signal transmitting occasion are associated with the scheduling signal transmitting occasion. Taking FIG. 7E as an example, in FIG. 7E, the first signal time domain resource is specifically a scheduling signal transmitting occasion, and the backscatter time domain resource is specifically a backscatter communication occasion. As shown in FIG. 7E, the first time domain resource set includes 9 backscatter communication occasions. For any scheduling signal transmitting occasion in the first time domain resource set, a bitmap may be used to indicate whether any backscatter communication occasion after the scheduling signal transmitting occasion in the first time domain resource set is associated with the scheduling signal transmitting occasion, and one bit thereof is used to indicate 2 backscatter communication occasions in the first time domain resource set. For example, when a value of any bit is 1, it indicates association; and when a value of any bit is 0, it indicates no association. Alternatively, it may be set that a value of 1 indicates no association and a value of 0 indicates association. In FIG. 7E, there are 8 backscatter communication occasions after the first scheduling signal transmitting occasion in the first time domain resource set. A bitmap with a length of 4 bits may be used to indicate whether each backscatter communication occasion after the first scheduling signal transmitting occasion is associated with the first scheduling signal transmitting occasion. For example, in FIG. 7E, the bitmap used to indicate the association relationship of the first scheduling signal transmitting occasion may take the value of "1010", which is used to indicate whether each backscatter communication occasion after the first scheduling signal transmitting occasion is associated with the first scheduling signal transmitting occasion. It can be seen that the minimum unit of the association relationship is two backscatter communication occasions.

For the case where the number of backscatter communication occasions that exist after the scheduling signal transmitting occasion is not exactly divided by the number of backscatter communication occasions indicated by a bit in the bitmap, a method similar to that shown in FIGS. 7B and 7C above may be used. For example, a special bit in the bitmap is used to indicate Y backscatter communication occasions, the remaining bits each indicate X backscatter communication occasions, and the number of bits contained in the bitmap is equal to the value rounding up or down the ratio of the number of backscatter communication occasions that exist after the scheduling signal transmitting occasion to X. For example, there are 7 backscatter communication occasions after the first scheduling signal transmitting occasion, and the serial numbers thereof are 1, 2, 3, 4, 5, 6, and 7. A bitmap with a length of 4 bits may be used for indication, for example, the first bit indicates whether backscatter communication occasions 1 and 2 are associated with the first scheduling signal transmitting occasion, the second bit indicates whether backscatter communication occasions 3 and 4 are associated with the first scheduling signal transmitting occasion, the third bit indicates whether backscatter communication occasions 5 and 6 are associated with the first scheduling signal transmitting occasion, and the fourth bit indicates whether a backscatter communication occasion 7 is associated with the first scheduling signal transmitting occasion.

Taking FIG. 7F as an example, in FIG. 7F, the first signal time domain resource is specifically a scheduling signal transmitting occasion, and the backscatter time domain resource is specifically a backscatter communication occasion. As shown in FIG. 7F, the first time domain resource set includes 10 basic communication units, and each basic communication unit may be used to transmit a scheduling signal (i.e., as a scheduling signal transmitting occasion), or may be used to transmit a backscatter communication signal (i.e., as a backscatter communication occasion), or may not transmit any signal (i.e., as a blank basic communication unit). For any scheduling signal transmitting occasion in the first time domain resource set, a bitmap with a length of 10 bits may be used to indicate whether each basic communication unit in the first time domain resource set meets the following two requirements:

1) there being a backscatter communication occasion on the basic communication unit;

2) the backscatter communication occasion existing on the basic communication unit being associated with the scheduling signal transmitting occasion.

For example, when a value of any bit is 1, it means that the above two requirements are met; and when a value of any bit is 0, it means that any one of the above two requirements is not met, or only one of the above two requirements is met. Alternatively, it may be set that a value of 0 indicates that the above two requirements are met.

As shown in FIG. 7F, in the first time domain resource set of FIG. 7F, a bitmap of "0000100100" is used to represent the backscatter communication occasions associated with the first scheduling signal transmitting occasion in the first time domain resource set, and each bit in the bitmap is used to indicate a basic communication unit. For example, the value of the fifth bit in the bitmap is 1, which indicates that there is a backscatter time domain resource on the fifth basic communication unit in the first time domain resource set, and the backscatter time domain resource is associated with the first scheduling signal transmitting occasion.

In some implementations, numbers of backscatter time domain resources associated with all first signal time domain resources are independently configured (e.g., all BCOs are configured separately); alternatively, the numbers of backscatter time domain resources associated with all first signal time domain resources in each first time domain resource set are uniformly configured (e.g., all first time domain resource sets are configured separately).

In some implementations, the backscatter time domain resource associated with the first signal time domain resource is located after the first signal time domain resource;

alternatively, the backscatter time domain resource associated with the first signal time domain resource is located after the first signal time domain resource or overlaps with the first signal time domain resource.

In some implementations, the terminal device monitoring the first signal on the first time domain resource set, includes:

performing, by the terminal device, monitoring on all first signal time domain resources in the first time domain resource set; alternatively,
determining, by the terminal device, the first signal time domain resources that need to be monitored in the first time domain resource set based on the user equipment (UE) identification (ID) (or a terminal group identification (UE group ID)), and performing, by the terminal device, monitoring on the first signal time domain resources that need to be monitored; alternatively,
determining, by the terminal device, the first signal time domain resources that need to be monitored in the first time domain resource set based on the UE ID (or the UE group ID) and the cell ID, and performing, by the terminal device, monitoring on the first signal time domain resources that need to be monitored.

For example, a first signal sent by the network device to any terminal device may be transmitted on all first signal time domain resources in the first time domain resource set. Accordingly, the terminal device may monitor the first signal on all first signal time domain resources in the first time domain resource set.

Alternatively, the first signal time domain resources in the first time domain resource set are divided into at least two parts, and each part corresponds to some terminal devices. When the network device sends a first signal to a terminal device, the network device determines which first signal time domain resources correspond to the terminal device, and then sends the first signal to the terminal device on these first signal time domain resources. Accordingly, when the terminal device monitors the sent signal, the terminal device only monitors on the first signal transmitting occasions corresponding thereto. That is, the network device determines the first signal time domain resources available to the terminal device in the first time domain resource set according to the user equipment (UE) identification (ID) (or the terminal group identification), and sends the first signal on the first signal time domain resources; alternatively, the network device determines the first signal time domain resources available to the terminal device in the first time domain resource set according to the user equipment (UE) identification (ID) (or the terminal group identification) and the cell ID, and sends the first signal on the first signal time domain resources.

For example, the first signal transmitting occasions in the first time domain resource set are divided into a first part and a second part, and the correspondence relationship between each part and the UE ID of the terminal device is preset. If (UE ID) mod 2=1, the terminal device corresponds to the first signal transmitting occasions in the first part; if (UE ID) mod 2=0, the terminal device corresponds to the first signal transmitting occasions in the second part. According to this setting, when the network device sends a first signal to the terminal device, the network device determines which part of the backscatter communication occasions are used for transmitting the first signal according to the UE ID of the terminal device, and sends the first signal to the terminal device on the determined backscatter communication occasions. Accordingly, the terminal device also determines the corresponding backscatter communication occasions according to its own UE ID, and monitors the first signal on the determined backscatter communication occasions.

For another example, the first signal transmitting occasions in the first time domain resource set are divided into a first part and a second part, and the correspondence relationship between each part and both the UE ID and the cell ID of the terminal device is preset. If (UE ID + cell ID) mod 2=1, the terminal device corresponds to the first signal transmitting occasions in the first part; if (UE ID + cell ID) mod 2=0, the terminal device corresponds to the first signal transmitting occasions in the second part. According to this setting, when the network device sends a first signal to the terminal device, the network device determines which part of the backscatter communication occasions are used for transmitting the first signal according to the UE ID of the terminal device and the cell ID of the cell in which the terminal device is located, and sends the first signal to the terminal device on the determined backscatter communication occasions. Accordingly, the terminal device also determines the corresponding backscatter communication occasions according to its own UE ID and the cell ID of the cell in which the terminal device is located, and monitors the first signal on the determined backscatter communication occasions.

The above-mentioned UE ID may be replaced by the group ID of the UE group where the terminal device is located. For example, the terminal device determines the first signal time domain resources that needs to be monitored based on the group ID of the UE group where the terminal device is located, or based on the group ID of the UE group where the terminal device is located and the cell ID of the cell where the terminal device is located. Accordingly, when sending the first signal, the network device may determine the first signal time domain resources corresponding to different terminal devices based on the group identification of the UE group where the terminal device is located, or based on the group identification of the UE group where the terminal device is located and the cell ID of the cell where the terminal device is located, and send the first signal of the corresponding terminal device on the determined first signal time domain resources.

In some implementations, backscatter time domain resources associated with different first signal time domain resources may be completely identical, completely different, or partially identical.

In some implementations, different first signal time domain resources in the same first time domain resource set are allowed to send the same first signal control information.

The above introduces two association modes of the first signal (or the first signal time domain resource) and the backscatter (or the backscatter time domain resource), and the operation modes of the terminal device and the network device under different modes.

In a case where the terminal device determines a plurality of backscatter time domain resources associated with the received first signal, the terminal device performs backscatter communication based on the one or more backscatter time domain resources, which includes, for example:

> selecting, by the terminal device, a backscatter time domain resource from the plurality of backscatter time domain resources randomly, and performing backscatter communication using the selected backscatter time domain resource; alternatively,

performing, by the terminal device, backscatter communication based on a selected backscatter time domain resource, the backscatter time domain resource being selected by the terminal device based on the UE ID from the plurality of backscatter time domain resources; alternatively,

performing, by the terminal device, backscatter communication based on a selected backscatter time domain resource, the backscatter time domain resource being selected by the terminal device based on the UE ID and the cell ID from the plurality of backscatter time domain resources; alternatively,

performing, by the terminal device, backscatter communication based on a selected backscatter time domain resource, the backscatter time domain resource being selected by the terminal device based on the group identification from the plurality of backscatter time domain resources; alternatively,

performing, by the terminal device, backscatter communication based on a selected backscatter time domain resource, the backscatter time domain resource being selected by the terminal device based on the group identification and the cell ID from the plurality of backscatter time domain resources.

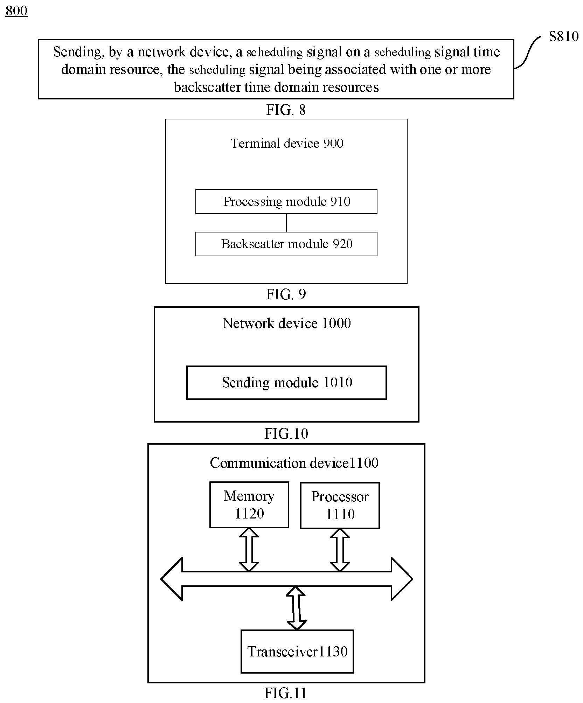

Embodiments of the present application further provide a backscatter communication method, and the backscatter communication method may be applied to a network device. FIG. 8 is a schematic flowchart of the backscatter communication method 800 in accordance with an embodiment of the present application. The method may optionally be applied to the systems shown in FIG. 1 and FIG. 2, but is not limited thereto. The method includes at least part of the following:
S810: sending, by a network device, a first signal on a first signal time domain resource, the first signal being associated with one or more backscatter time domain resources.

In some implementations, the first signal has at least one of the following functions:

> triggering backscatter communication;
> scheduling backscatter communication; and
> carrying indicating information of the time domain resource(s) for performing backscatter communication.

In some implementations, the method further includes: monitoring, by the network device, backscatter communication on one or more backscatter time domain resources associated with the first signal.

In some implementations, the one or more backscatter time domain resources associated with the first signal are located after the first signal time domain resource where the first signal is located and/or overlap with the first signal time domain resource where the first signal is located.

In some implementations, the first signal time domain resource where the first signal is located overlaps with one or more backscatter time domain resources associated with another first signal; alternatively,

the first signal time domain resource where the first signal is located does not overlap with one or more backscatter time domain resources associated with another first signal.

In some implementations, a time interval between a first signal time domain resource where the first signal is located and a backscatter time domain resource associated with the first signal is a time domain offset, and the unit of the time domain offset includes: microseconds, milliseconds, seconds, OFDM symbols, time slots, subframes, frames or basic time units of backscatter communication.

In some implementations, the time domain offset includes an offset from a first reference point to a second reference point; where

the first reference point is associated with the first signal; and
the second reference point is associated with the backscatter time domain resource.

In some implementations, the first reference point includes at least one of a starting point of the first signal, an end point of the first signal, a starting point of a time unit where the first signal is located, and an end point of a time unit where the first signal is located.

In some implementations, the second reference point includes at least one of a starting point of the backscatter time domain resource, an end point of the backscatter time domain resource, a starting point of a time unit where the backscatter time domain resource is located, and an end point of a time unit where the backscatter time domain resource is located.

In some implementations, the time unit includes OFDM symbols, time slots, subframes, frames, or basic time units of backscatter communication.

In some implementations, the time domain offsets corresponding to first signals are configured uniformly or independently.

In some implementations, the first signal is associated with one backscatter time domain resource or a plurality of backscatter time domain resources.

In some implementations, the association relationship between the first signal and the backscatter time domain resource is determined by a time domain offset.

In some implementations, the association relationship between the first signal and the plurality of backscatter time domain resources is determined by one or more time domain offsets.

In some implementations, in a case where the association relationship between the first signal and a plurality of backscatter time domain resources is determined by a plurality of time domain offsets, each of the time domain offsets is used to determine a backscatter time domain resource that has an association relationship with the first signal.

In some implementations, the association relationship between the first signal and a plurality of backscatter time domain resources is determined by a time domain offset and the number of backscatter time domain resources associated with the first signal.

In some implementations, the association relationship between the first signal and a plurality of backscatter time domain resources is determined by a time domain offset, the number of backscatter time domain resources associated with the first signal, and an interval between two adjacent backscatter time domain resources associated with the first signal.

In some implementations, the method further includes: configuring, by the network device, the time domain offset, the number of backscatter time domain resources associated with the first signal, or an interval between two adjacent backscatter time domain resources associated with the first signal.

In some implementations, the network device configures the time domain offset, the number of backscatter time domain resources associated with the first signal, or the interval between two adjacent backscatter time domain resources associated with the first signal through the first signal.

In some implementations, the format of the first signal includes at least one of a first format, a second format and a third format, where

the first signal in the first format is associated with one or more backscatter time domain resources;
the first signal in the second format is associated with a backscatter time domain resource; and
the first signal in the third format is associated with a plurality of backscatter time domain resources.

In some implementations, backscatter time domain resources associated with different first signals are completely identical, completely different or partially identical.

In some implementations, durations of different backscatter time domain resources are the same or different.

In some implementations, the network device sending the first signal on the first signal time domain resource, includes:

determining, by the network device, the first signal time domain resource in a first time domain resource set based on a UE ID of a terminal device that needs to communicate, and sending, by the network device, the first signal on the first signal time domain resource; alternatively,
sending, by the network device, the first signal on the first signal time domain resource, the first signal time domain resource in the first time domain resource set being determined by the network device based on a UE ID and a cell ID of a terminal device that needs to communicate; alternatively,

sending, by the network device, the first signal on the first signal time domain resource, the first signal time domain resource in the first time domain resource set being determined by the network device based on a group identification of a terminal device that needs to communicate; alternatively,

sending, by the network device, the first signal on the first signal time domain resource, the first signal time domain resource in the first time domain resource set being determined by the network device based on a group identification and a cell ID of a terminal device that needs to communicate.

In some implementations, the method further includes: configuring, by the network device, the number of backscatter time domain resources associated with the first signal.

In some implementations, the network device configures the number of backscatter time domain resources associated with the first signal through the first signal.

The above method may further include: configuring, by the network device, an association rule between the first signal and the backscatter time domain resources.

In some implementations, the association rule is represented by a bitmap.

In some implementations, the bitmap includes M1 bits. Each bit corresponds to X1 backscatter time domain resources or X1 basic communication units in the first time domain resource set where the first signal time domain resource is located; alternately, one bit of the bitmap corresponds to Y1 backscatter time domain resources or Y1 basic communication units in the first time domain resource set where the first signal time domain resource is located, and each bit in the remaining bits of the bitmap corresponds to X1 backscatter time domain resources or X1 basic communication units in the first time domain resource set where the first signal time domain resource is located. The relationship between M1 and X1 satisfies M1=T1/X1, $M1=\lceil T1/X1 \rceil$, or $M1=\lfloor T1/X1 \rfloor$, where T1 represents the number of backscatter time domain resources or the number of basic communication units that satisfy the third condition in the first time domain resource set where the first signal time domain resource is located.

In some implementations, the third condition includes:

being located at any location in the first time domain resource set where the first signal time domain resource is located; alternatively,

being located in the first time domain resource set where the first signal time domain resource is located and after the first signal time domain resource; alternatively,

being located in the first time domain resource set where the first signal time domain resource is located, and located after the first signal time domain resource or overlapping with the first signal time domain resource.

In some implementations, the bitmap includes M2 bits, and each bit corresponds to X2 basic communication units or X2 backscatter time domain resources; X2 or M2 is a positive integer.

In some implementations, the bitmap includes M3 bits. Each bit corresponds to X3 backscatter time domain resources or X3 basic communication units; alternately, one bit of the bitmap corresponds to Y3 backscatter time domain resources or Y3 basic communication units, and each bit in the remaining bits of the bitmap corresponds to X3 backscatter time domain resources or X3 basic communication units respectively. The relationship between M3 and X3 satisfies M3=T3/X3, $M3=\lceil T3/X3 \rceil$, or $M3=\lfloor T3/X3 \rfloor$, where T3 represents the number of backscatter time domain resources or the number of basic communication units that satisfy the fourth condition in the K first time domain resource sets, and K is a positive integer.

In some implementations, T3 represents the number of backscatter time domain resources or the number of basic communication units that satisfy the fourth condition in the K consecutive first time domain resource sets;

alternatively, T3 represents the number of backscatter time domain resources or the number of basic communication units that satisfy the fourth condition in K consecutive first time domain resource sets containing backscatter time domain resources.

The fourth condition may include:

being located at any location in the K first time domain resource sets; alternatively,

being located in the K first time domain resource sets and located after the first signal time domain resource; alternatively,

being located in the K first time domain resource sets and located after the first signal time domain resource or overlapping with the first signal time domain resource.

In some implementations, the method further includes:

configuring, by the network device, a second time domain resource set, the time domain resource set including a plurality of first time domain resource sets.

Specifically, the network device configures the second time domain resource set through the first signal.

In some implementations, the numbers of backscatter time domain resources associated with all first signal time domain resources are configured independently; alternatively,

the numbers of backscatter time domain resources associated with all first signal time domain resources in each first time domain resource set are configured uniformly.

In some implementations, the backscatter time domain resource associated with the first signal time domain resource is located after the first signal time domain resource; alternatively, the backscatter time domain resource associated with the first signal time domain resource is located after the first signal time domain resource or overlaps with the first signal time domain resource.

In some implementations, the first time domain resource set includes one or more first signal time domain resources.

In some implementations, the first time domain resource set includes one or more backscatter time domain resources.

The above method may further include: sending, by the network device, location information of the first signal time domain resources and/or backscatter time domain resources in the first time domain resource set; the location information including a starting location and/or duration.

In some implementations, the first time domain resource sets include first-type first time domain resource sets and second-type first time domain resource sets, the first-type first time domain resource set is a first time domain resource set including first signal time domain resources and/or backscatter time domain resources, and the second-type first time domain resource set is a first time domain resource set including neither first signal time domain resources nor backscatter time domain resources; and

the location information of the first signal time domain resources and/or the backscatter time domain resources in the first time domain resource set includes:
distribution information of the first signal time domain resources and/or the backscatter time domain resources in the first-type first time domain resource set; and/or
periodic distribution information of the first-type first time domain resource sets and the second-type first time domain resource sets, each period including at least one first-type first time domain resource set and/or at least one second-type first time domain resource set.

In some implementations, the patterns of different first time domain resource sets are the same or different. The patterns include distribution information of the first signal time domain resources and/or backscatter time domain resources in the first time domain resource set.

In some implementations, all first signal time domain resources in the first time domain resource set are before any backscatter time domain resource in the first time domain resource set; alternatively,

there is a first signal time domain resource in the first time domain resource set that is located after a backscatter time domain resource in the first time domain resource set; alternatively,
there is a first signal time domain resource and a backscatter time domain resource, that occupy the same basic communication unit, in the first time domain resource set.

In some implementations, the basic communication unit is a component unit of the first time domain resource set; and

the first time domain resource set is determined based on the number of the basic communication units and/or the time duration of the basic communication unit.

In some implementations, backscatter time domain resources associated with different first signal time domain resources are completely identical, completely different or partially identical.

In some implementations, different first signal time domain resources in the same first time domain resource set are allowed to send the same first signal.

In some implementations, the backscatter time domain resources include backscatter communication occasions.

In some implementations, the first signal time domain resources include first signal transmitting occasions.

In summary, the backscatter communication method provided in embodiments of the present application provides a method for associating the scheduling signal transmitting occasion with the backscatter communication occasions in zero-power communication, and provides at least the following two modes. In the first mode, each scheduling signal is associated with one or more backscatter communication occasions. In the second mode, the scheduling signal is associated with the backscatter communication occasions based on the first time domain resource set. Based on the above two association modes, in an aspect, the network device may determine the backscatter occasions associated with the scheduling signal transmitting occasion based on the time domain offset; in another aspect, for semi-statically configured resources, the scheduling signal transmitting occasion and the backscatter communication occasions associated thereto may be determined in the first time domain resource set. Based on embodiments of the present application, it is convenient for a network device to control the zero-power communication process, and both the timing relationship and the mapping relationship between the scheduling signal and the backscatter communication occasions are clarified.

Thus, the conflicts and collisions of the zero-power device during backscatter communication may be effectively reduced.

FIG. 9 is a schematic block diagram of a terminal device 900 in accordance with an embodiment of the present application. The terminal device 900 may include:

> a processing module 910 configured to determine one or more backscatter time domain resources associated with a received first signal; and
> a backscatter module 920 configured to perform backscatter communication based on the one or more backscatter time domain resources.

The terminal device 900 in embodiments of the present application can achieve the corresponding functions of the terminal device in the aforementioned method embodiments. For processes, functions, implementations and beneficial effects corresponding to all modules (sub-modules, units or components) in the terminal device 900, reference may be made to the corresponding description in the above method embodiments, and details are not repeated here. It will be noted that the functions described in the various modules (sub-modules, units or components) in the terminal device 900 of the embodiments of the present application may be achieved by different modules (sub-modules, units or components) or by the same module (sub-module, unit or component).

FIG. 10 is a schematic block diagram of a network device 1000 in accordance with an embodiment of the present application. The network device 1000 may include:

a sending module 1010 configured to send a first signal on a first signal time domain resource, the first signal being associated with one or more backscatter time domain resources.

The network device 1000 in the embodiments of the present application can achieve the corresponding functions of the network device in the aforementioned method embodiments. For processes, functions, implementations and beneficial effects corresponding to all modules (sub-modules, units or components) in the network device 1000, reference may be made to the corresponding description in the above method embodiments, and details are not repeated here. It will be noted that the functions described in the various modules (sub-modules, units or components) in the network device 1000 of the embodiments of the present application may be achieved by different modules (sub-modules, units or components) or by the same module (sub-module, unit or component).

FIG. 11 is a schematic structural diagram of a communication device 1100 in accordance with embodiments of the present application. The communication device 1100 includes a processor 1110, and the processor 1110 may call and run a computer program from a memory to enable the communication device 1100 to implement the method in embodiments of the present application.

In a possible implementation, the communication device 1100 may further include a memory 1120. The processor 1110 may call and run a computer program from the memory 1120 to enable the communication device 1100 to implement the method in embodiments of the present application.

The memory 1120 may be a separate device independent of the processor 1110, or may be integrated into the processor 1110.

In a possible implementation, the communication device 1100 may further include a transceiver 1130, and the processor 1110 may control the transceiver 1130 to communicate with other devices, specifically, may send information or data to other devices, or receive information or data sent by other devices.

The transceiver 1130 may include a transmitter and a receiver. The transceiver 1130 may further include an antenna, and there may be one or more antenna(s).

In a possible implementation, the communication device 1100 may be the network device in the embodiments of the present application, the communication device 1100 may implement the corresponding processes implemented by the network device in each method in the embodiments of the present application, and details are not repeated here for the sake of brevity.

In a possible implementation, the communication device 1100 may be the terminal device in the embodiments of the present application, the communication device 1100 may implement the corresponding processes implemented by the terminal device in each method in the embodiments of the present application, and details are not repeated here for the sake of brevity.

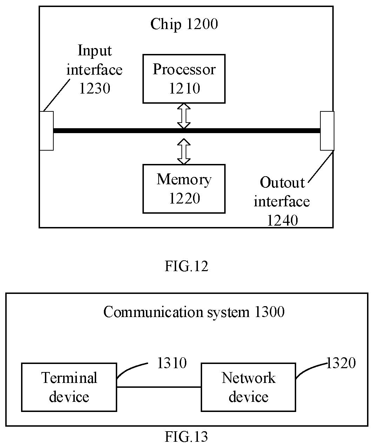

FIG. 12 is a schematic structural diagram of a chip 1200 in accordance with embodiments of the present application. The chip 1200 includes a processor 1210, and the processor 1210 may call and run a computer program from a memory to implement the method in the embodiments of the present application.

In a possible implementation, the chip 1200 may further include a memory 1220. The processor 1210 may call and run a computer program from the memory 1220 to implement the method performed by the terminal device or the network device in the embodiments of the present application.

The memory 1220 may be a separate device independent of the processor 1210, or may be integrated into the processor 1210.

In a possible implementation, the chip 1200 may further include an input interface 1230. The processor 1210 may control the input interface 1230 to communicate with other devices or chips, and specifically, may obtain information or data sent by other devices or chips.

In a possible implementation, the chip 1200 may further include an output interface 1240. The processor 1210 may control the output interface 1240 to communicate with other devices or chips, and specifically, may output information or data to other devices or chips.

In a possible implementation, the chip may be applied to the network device in the embodiments of the present application, and the chip may implement the corresponding processes implemented by the network device in each method of the embodiments of the present application, and details are not repeated here for the sake of brevity.

In a possible implementation, the chip may be applied to the terminal device in the embodiments of the present application, and the chip may implement the corresponding processes implemented by the terminal device in each method of the embodiments of the present application, and details are not repeated here for the sake of brevity.

The network device and the terminal device may use the same chip or different chips.

It should be understood that the chip mentioned in the embodiments of the present application may also be referred to as a system-level chip, a system chip, a chip system or a system-on-chip, or the like.

The processor mentioned above may be a general-purpose processor, a digital signal processor (DSP), a field programmable gate array (FPGA), an application specific integrated circuit (ASIC), other programmable logic devices, a transistor logic device, a discrete hardware component, or the like. The general purpose processor mentioned above may be a microprocessor or any conventional processor, or the like.

The memory mentioned above may be a volatile (transitory) memory or a non-volatile (non-transitory) memory, or may include both volatile and non-volatile memories. Here, the non-volatile memory may be a read-only memory (ROM), a programmable ROM (PROM), an erasable programmable read-only memory (erasable PROM, EPROM), an electrically erasable programmable read-only memory (electrically EPROM, EEPROM), or a flash memory. The volatile memory may be a random access memory (RAM).

It should be understood that the above-mentioned memory is exemplary but not restrictive. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct memory bus random access memory (Direct Rambus RAM, DR RAM), or the like. That is, the memory in the embodiments of the present application is intended to include but is not limited to these and any other suitable types of memory.

FIG. 13 is a schematic block diagram of a communication system 1300 in accordance with embodiments of the present application. The communication system 1300 includes a terminal device 1310 and a network device 1320.

The terminal device 1310 may be used to implement the corresponding functions implemented by the terminal device in the above method, and the network device 1320 may be used to implement the corresponding functions implemented by the network device in the above method, which will not be repeated here for the sake of brevity.

The above embodiments may be implemented in whole or in part through software, hardware, firmware, or any combination thereof. When the embodiments are implemented by using software, the software may be implemented in a form of a computer program product in whole or in part. The computer program product includes one or more computer instructions. When computer program instructions are loaded on and executed by a computer, processes or functions according to the embodiments of the present application are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (e.g., coaxial cable, optical fiber, or digital subscriber line (DSL)) or a wireless manner (e.g., infrared, radio or microwave). The computer-readable storage medium may be any available medium accessible by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It should be understood that in the various embodiments of the present application, the magnitude of the serial number of each of the above-mentioned processes does not mean the order of execution. The order of execution of each process shall be determined by its function and internal logic, and shall not constitute any limitation on the implementation process of the embodiments of the present application.

Those skilled in the art can clearly understand that for the convenience and simplicity of description, the working processes of the systems, devices and units described above may refer to the corresponding processes in the above method embodiments, and details will not be repeated here.

The foregoing descriptions are merely specific implementations of the present application, but the protection scope of the present application is not limited thereto. Any skilled person in the art could readily conceive of changes or replacements within the technical scope of the present application, which shall all be included in the protection scope of the present application. Therefore, the protection scope of the present application shall be subject to the protection scope of the claims.

**Claims**

1. A backscatter communication method, comprising:

   determining, by a terminal device, one or more backscatter time domain resources associated with a received first signal; and
   performing, by the terminal device, backscatter communication based on the one or more backscatter time domain resources.

2. The method of claim 1, wherein the first signal has at least one of following functions:

   triggering backscatter communication;
   scheduling backscatter communication; and
   carrying indicating information of time domain resource(s) for performing backscatter communication.

3. The method of claim 1 or 2, wherein determining, by the terminal device, the one or more backscatter time domain resources associated with the received first signal, comprises:
   determining, by the terminal device, the one or more backscatter time domain resources associated with the received first signal based on at least one of:

   a starting point of a backscatter time domain resource;
   a first signal time domain resource where the first signal is located;
   a time domain offset;
   a duration of the backscatter time domain resource;
   a format of the first signal;
   a number of backscatter time domain resource(s) associated with the first signal; and
   an interval between two adjacent backscatter time domain resources associated with the first signal.

4. The method of any one of claims 1 to 3, wherein the one or more backscatter time domain resources associated with the received first signal are located after a first signal time domain resource where the received first signal is located, and/or overlap with a location of the first signal time domain resource where the received first signal is located.

5. The method of any one of claims 1 to 4, wherein

   a first signal time domain resource where the received first signal is located overlaps with one or more backscatter time domain resources associated with another first signal; or
   a first signal time domain resource where the received first signal is located does not overlap with one or more backscatter time domain resources associated with another first signal.

6. The method of claim 3, wherein a unit of the time domain offset comprises: microseconds, milliseconds, seconds, OFDM symbols, time slots, subframes, frames or basic time units of backscatter communication.

7. The method of claim 3 or 6, wherein the time domain offset comprises an offset from a first reference point to a second reference point; wherein

   the first reference point is associated with the received first signal; and
   the second reference point is associated with the backscatter time domain resource.

8. The method of claim 7, wherein the first reference point comprises at least one of a starting point of the received first signal, an end point of the received first signal, a starting point of a time unit where the received first signal is located, and an end point of the time unit where the received first signal is located.

9. The method of claim 7 or 8, wherein
   the second reference point comprises at least one of the starting point of the backscatter time domain resource, an end point of the backscatter time domain resource, a starting point of a time unit where the backscatter time domain resource is located, and an end point of the time unit where the backscatter time domain resource is located.

10. The method of claim 8 or 9, wherein a time unit comprises: orthogonal frequency division multiplexing (OFDM) symbols, time slots, subframes, frames or basic time units of backscatter communication.

11. The method of any one of claims 3, and 6 to 10, wherein time domain offsets corresponding to all first signals are configured uniformly or independently.

12. The method of any one of claims 3, and 6 to 11, wherein the first signal is associated with one backscatter time domain resource or a plurality of backscatter time domain resources.

**13.** The method of claim 12, wherein an association relationship between the first signal and the backscatter time domain resource is determined by a time domain offset.

**14.** The method of claim 12, wherein an association relationship between the first signal and the plurality of backscatter time domain resources is determined by one or more time domain offsets.

**15.** The method of claim 14, wherein in a case where the association relationship between the first signal and the plurality of backscatter time domain resources is determined by a plurality of time domain offsets, each time domain offset is used to determine a backscatter time domain resource associated with the first signal.

**16.** The method of claim 14, wherein the association relationship between the first signal and the plurality of backscatter time domain resources is determined by a time domain offset and the number of the backscatter time domain resources associated with the first signal.

**17.** The method of claim 14, wherein the association relationship between the first signal and the plurality of backscatter time domain resources is determined by a time domain offset, the number of the backscatter time domain resources associated with the first signal, and an interval between two adjacent backscatter time domain resources associated with the first signal.

**18.** The method of any one of claims 3, and 6 to 17, wherein

at least one of the starting point of the backscatter time domain resource, the duration of the backscatter time domain resource, the number of the backscatter time domain resource(s) associated with the first signal, and the interval between two adjacent backscatter time domain resources associated with the first signal is specified by a protocol; and/or

at least one of the starting point of the backscatter time domain resource, the duration of the backscatter time domain resource, the number of the backscatter time domain resource(s) associated with the first signal, and the interval between two adjacent backscatter time domain resources associated with the first signal is configured by a network device.

**19.** The method of claim 18, wherein
the at least one of the starting point of the backscatter time domain resource, the duration of the backscatter time domain resource, the number of the backscatter time domain resource(s) associated with the first signal, and the interval between two adjacent backscatter time domain resources associated with the first signal is configured by the network device through the first signal.

**20.** The method of any one of claims 1 to 19, wherein a format of the first signal comprises at least one of a first format, a second format and a third format, wherein

the first signal in the first format is associated with one or more backscatter time domain resources;
the first signal in the second format is associated with a backscatter time domain resource; and
the first signal in the third format is associated with a plurality of backscatter time domain resources.

**21.** The method of any one of claims 1 to 20, wherein backscatter time domain resources associated with different first signals are completely identical, completely different or partially identical.

**22.** The method of any one of claims 1 to 21, wherein durations of different backscatter time domain resources are same or different.

**23.** The method of claim 1, further comprising:
monitoring, by the terminal device, the first signal on a first time domain resource set.

**24.** The method of claim 23, wherein determining, by the terminal device, the one or more backscatter time domain resources associated with the received first signal, comprises:

determining, by the terminal device, all backscatter time domain resources in the first time domain resource set located after the first signal, and using, by the terminal device, the determined backscatter time domain resources as the one or more backscatter time domain resources associated with the first signal; or
determining, by the terminal device, all backscatter time domain resources in the first time domain resource set located after the first signal and overlap with the first signal, and using, by the terminal device, the determined backscatter time domain resources as the one or more backscatter time domain resources associated with the first signal.

**25.** The method of claim 23, wherein determining, by the terminal device, the one or more backscatter time domain resources associated with the received first signal, comprises:

determining, by the terminal device, all backscatter time domain resources in a second time domain resource set located after the first signal, and using, by the terminal device, the determined backscatter time domain resources as the one or more backscatter time domain resources associated with the first signal; or determining, by the terminal device, all backscatter time domain resources in a second time domain resource set that are located after the first signal and overlap with the first signal, and using, by the terminal device, the determined backscatter time domain resources as the one or more backscatter time domain resources associated with the first signal;

wherein the second time domain resource set comprises a plurality of first time domain resource sets.

**26.** The method of claim 23, wherein determining, by the terminal device, the one or more backscatter time domain resources associated with the received first signal, comprises:

determining, by the terminal device, N1 backscatter time domain resource(s) meeting a first condition, and using, by the terminal device, the determined backscatter time domain resource(s) as the backscatter time domain resource(s) associated with the first signal; the N1 being a positive integer;

wherein the first condition comprises:

a backscatter time domain resource being located after the first signal; or a backscatter time domain resource being located after the first signal or overlapping with the first signal.

**27.** The method of claim 26, wherein the N1 is a preset value; or the N1 is configured by a network device.

**28.** The method of claim 27, wherein the N1 is configured by the network device through the first signal.

**29.** The method of claim 23, wherein determining, by the terminal device, the one or more backscatter time domain resources associated with the received first signal, comprises:
determining, by the terminal device, N2 or less backscatter time domain resource(s) satisfying a second condition, and using, by the terminal device, the determined backscatter time domain resource(s) as the backscatter time domain resource(s) associated with the first signal; the N2 being a positive integer.

**30.** The method of claim 29, wherein in a case where a number of the backscatter time domain resources satisfying the second condition is greater than or equal to N2, the terminal device uses the N2 backscatter time domain resource(s) satisfying the second condition as the backscatter time domain resource(s) associated with the first signal; or
in a case where the number of the backscatter time domain resources satisfying the second condition is less than N2, the terminal device uses all backscatter time domain resource(s) satisfying the second condition as the backscatter time domain resource(s) associated with the first signal.

**31.** The method of claim 29 or 30, wherein the second condition comprises:

a backscatter time domain resource being located within the first time domain resource set and located after the first signal; or a backscatter time domain resource being located within the first time domain resource set and located after the first signal or overlapping with the first signal.

**32.** The method of claim 29 or 30, wherein the second condition comprises:

a backscatter time domain resource being located within a second time domain resource set to which the first time domain resource set belongs and located after the first signal; or a backscatter time domain resource being located within a second time domain resource set to which the first time domain resource set belongs, and located after the first signal or overlapping with the first signal; wherein the second time domain resource set comprises a plurality of first time domain resource sets.

**33.** The method of any one of claims 29 to 32, wherein the N2 is a preset value; or the N2 is configured by a network device.

**34.** The method of claim 33, wherein the N2 is configured by the network device through the first signal.

**35.** The method of claim 23, wherein determining, by the terminal device, the one or more backscatter time domain resources associated with the received first signal, comprises:
determining, by the terminal device, N3 backscatter time domain resource(s) satisfying an association rule, and using, by the terminal device, the determined backscatter time domain resource(s) as the backscatter time domain resource(s) associated with the first signal; wherein the N3 is a number of backscatter time domain resources that are associated with a first signal time domain resource where the first signal is located, and the N3 is indicated by the association rule.

**36.** The method of claim 23, wherein determining, by the terminal device, the one or more backscatter time domain resources associated with the received first signal, comprises:
determining, by the terminal device, N3 or less backscatter time domain resource(s) satisfying an association rule, and using, by the terminal device, the determined backscatter time domain resource(s) as the backscatter time domain resource(s) associated with the first signal; wherein the N3 is a number of backscatter time domain resources associated with a first signal time domain resource where the first signal is located, and the N3 is indicated by the association rule.

**37.** The method of claim 36, wherein

in a case where a number of backscatter time domain resources satisfying the association rule in the first time domain resource set is greater than or equal to N3, the terminal device uses the N3 backscatter time domain resource(s) satisfying the association rule as the backscatter time domain resources associated with the first signal; and
in a case where the number of the backscatter time domain resources satisfying the association rule in the first time domain resource set is less than N3, the terminal device uses all backscatter time domain resources satisfying the association rule as the backscatter time domain resources associated with the first signal.

**38.** The method of claim 36, wherein

in a case where a number of backscatter time domain resources satisfying the association rule in a second time domain resource set to which the first time domain resource set belongs is greater than or equal to N3, the terminal device uses the N3 backscatter time domain resources satisfying the association rule as the backscatter time domain resources associated with the first signal; and
in a case where the number of the backscatter time domain resources satisfying the association rule in a second time domain resource set to which the first time domain resource set belongs is less than N3, the terminal device uses all backscatter time domain resources satisfying the association rule as the backscatter time domain resources associated with the first signal;
wherein the second time domain resource set comprises a plurality of first time domain resource sets.

**39.** The method of claim 25, 32 or 38, wherein a number of the first time domain resource sets in the second time domain resource set is specified by a protocol or configured by a network device.

**40.** The method of claim 39, wherein the number of the first time domain resource sets in the second time domain resource set is configured by the network device through the first signal.

**41.** The method of any one of claims 35 to 38, wherein the N3 or the association rule is preset; or the N3 or the association rule is configured by a network device.

**42.** The method of claim 41, wherein the N3 or the association rule is configured by the network device through the first signal.

**43.** The method of any one of claims 35 to 42, wherein the association rule is represented by a bitmap.

**44.** The method of claim 43, wherein the bitmap comprises M1 bits; each bit corresponds to X1 backscatter time domain resources or X1 basic communication units in the first time domain resource set where the first signal time domain resource is located; or one bit of the bitmap corresponds to Y1 backscatter time domain resources or Y1 basic communication units in the first time domain resource set where the first signal time domain resource is located, and each bit in remaining bits of the bitmap corresponds to X1 backscatter time domain resources or X1 basic communication units in the first time domain resource set where the first signal time domain resource is located; a relationship between the M1 and the X1 satisfies M1=T1/X1, $M1 = \lceil T1/X1 \rceil$, or $M1 = \lfloor T1/X1 \rfloor$, wherein the T1 represents a number of backscatter time domain resources or a number of basic communication units satisfying a third condition in the first time domain resource set where the first signal time domain resource is located.

**45.** The method of claim 44, wherein the third condition comprises:

being located at any location in the first time domain resource set where the first signal time domain resource is located; or
being located in the first time domain resource set where the first signal time domain resource is located and after the first signal time domain resource; or

being located in the first time domain resource set where the first signal time domain resource is located, and located after the first signal time domain resource or overlapping with the first signal time domain resource.

**46.** The method of claim 43, wherein the bitmap comprises M2 bits, and each bit corresponds to X2 basic communication units or X2 backscatter time domain resources; the X2 or the M2 is a positive integer.

**47.** The method of claim 43, wherein the bitmap comprises M3 bits; each bit corresponds to X3 backscatter time domain resources or X3 basic communication units; or one bit of the bitmap corresponds to Y3 backscatter time domain resources or Y3 basic communication units, and each bit in remaining bits of the bitmap corresponds to X3 backscatter time domain resources or X3 basic communication units; a relationship between the M3 and the X3 satisfies M3=T3/X3, $M3=\lceil T3/X3 \rceil$, or $M3=\lfloor T3/X3 \rfloor$, wherein the T3 represents a number of backscatter time domain resources or a number of basic communication units satisfying a fourth condition in K first time domain resource sets, and K is a positive integer.

**48.** The method of claim 47, wherein the T3 represents a number of backscatter time domain resources or a number of basic communication units satisfying the fourth condition in K consecutive first time domain resource sets; or the T3 represents a number of backscatter time domain resources or a number of basic communication units satisfying the fourth condition in K consecutive first time domain resource sets containing the backscatter time domain resources.

**49.** The method of claim 47 or 48, wherein the fourth condition comprises:

being located at any location in the K first time domain resource sets; or being located in the K first time domain resource sets and located after the first signal time domain resource; or being located in the K first time domain resource sets and located after the first signal time domain resource or overlapping with the first signal time domain resource.

**50.** The method of any one of claims 35 to 49, wherein numbers of backscatter time domain resources associated with all first signal time domain resources are configured independently; or numbers of backscatter time domain resources associated with all first signal time domain resources in each first time domain resource set are configured uniformly.

**51.** The method of any one of claims 35 to 50, wherein

a backscatter time domain resource associated with the first signal time domain resource is located after the first signal time domain resource; or a backscatter time domain resource associated with the first signal time domain resource is located after the first signal time domain resource or overlaps with the first signal time domain resource.

**52.** The method of any one of claims 23 to 51, wherein the first time domain resource set comprises one or more first signal time domain resources.

**53.** The method of any one of claims 23 to 52, wherein the first time domain resource set comprises one or more backscatter time domain resources.

**54.** The method of any one of claims 23 to 53, further comprising: receiving location information of first signal time domain resources and/or backscatter time domain resources in the first time domain resource set; wherein the location information comprises a starting location and/or a duration.

**55.** The method of claim 54, wherein first time domain resource sets comprises first-type first time domain resource sets and second-type first time domain resource sets, the first-type first time domain resource sets are each a first time domain resource set comprising first signal time domain resources and/or backscatter time domain resources, and the second-type first time domain resource sets are each a first time domain resource set comprising neither first signal time domain resources nor backscatter time domain resources; and the location information of the first signal time domain resources and/or the backscatter time domain resources in the first time domain resource set comprises:

distribution information of first signal time domain resources and/or backscatter time domain resources in a first-type first time domain resource set; and/or periodic distribution information of the first-type first time domain resource sets and the second-type first time domain resource sets, each period comprising at least one first-type first time domain resource set and/or at least one second-type first time domain resource set.

**56.** The method of any one of claims 23 to 55, wherein patterns of different first time domain resource sets are same or different; and a pattern comprises distribution information of first signal time domain resources and/or backscatter time domain resources in the first time domain resource set.

**57.** The method of any one of claims 35 to 51, wherein

all first signal time domain resources in the first time domain resource set are located before any backscatter time domain resource in the first time domain resource set; or
the first time domain resource set comprises a first signal time domain resource that is located after a backscatter time domain resource in the first time domain resource set; or
the first time domain resource set comprises a first signal time domain resource and a backscatter time domain resource that occupy a same basic communication unit.

**58.** The method of any one of claims 43 to 49 and 57, wherein basic communication units are component units of the first time domain resource set; and
the first time domain resource set is determined based on a number of the basic communication units and/or a time duration of a basic communication unit.

**59.** The method of any one of claims 35 to 50, wherein backscatter time domain resources associated with different first signal time domain resources are completely identical, completely different or partially identical.

**60.** The method of any one of claims 35 to 50 and 59, wherein different first signal time domain resources in a same first time domain resource set are allowed to a same first signal.

**61.** The method of any one of claims 23 to 60, wherein monitoring, by the terminal device, the first signal on the first time domain resource set, comprises:

performing, by the terminal device, monitoring on all first signal time domain resources in the first time domain resource set; or
determining, by the terminal device, first signal domain resources in the first time domain resource set that need to be monitored based on a user equipment (UE) identification (ID), and performing, by the terminal device, monitoring on the first time domain resources that need to be monitored; or
determining, by the terminal device, first signal domain resources in the first time domain resource set that need to be monitored based on a UE ID and a cell ID, and performing, by the terminal device, monitoring on the first time domain resources that need to be monitored; or
determining, by the terminal device, first signal domain resources in the first time domain resource set that need to be monitored based on a terminal group identification, and performing, by the terminal device, monitoring on the first time domain resources that need to be monitored; or
determining, by the terminal device, first signal domain resources in the first time domain resource set that need to be monitored based on a terminal group identification and a cell ID, and performing, by the terminal device, monitoring on the first time domain resources that need to be monitored.

**62.** The method of any one of claims 23 to 61, wherein monitoring, by the terminal device, the first signal on the first time domain resource set, comprises: monitoring, by the terminal device, the first signal during power harvesting or after completing power harvesting.

**63.** The method of any one of claims 23 to 62, wherein in a case where the terminal device determines a plurality of backscatter time domain resources associated with the received first signal, performing, by the terminal device, backscatter communication based on the one or more backscatter time domain resources, comprises:

selecting, by the terminal device, a backscatter time domain resource from the plurality of backscatter time domain resources randomly, and performing backscatter communication using the selected backscatter time domain resource; or
selecting, by the terminal device, a backscatter time domain resource from the plurality of backscatter time domain resources based on a UE ID, and performing backscatter communication using the selected backscatter time domain resource; or,
selecting, by the terminal device, a backscatter time domain resource from the plurality of backscatter time domain resources based on a UE ID and a cell ID, and performing backscatter communication using the selected backscatter time domain resource; or,
selecting, by the terminal device, a backscatter time domain resource from the plurality of backscatter time domain resources based on a group identification, and performing backscatter communication using the selected backscatter time domain resource; or,

selecting, by the terminal device, a backscatter time domain resource from the plurality of backscatter time domain resources based on a group identification and a cell ID, and performing backscatter communication using the selected backscatter time domain resource.

**64.** The method of any one of claims 1 to 63, wherein the backscatter time domain resource(s) comprise backscatter communication occasions.

**65.** The method of any one of claims 3, 35 to 51, and 57 to 60, wherein the first signal time domain resource comprises a first signal transmitting occasion.

**66.** A backscatter communication method, comprising:
sending, by a network device, a first signal on a first signal time domain resource, the first signal being associated with one or more backscatter time domain resources.

**67.** The method of claim 66, wherein the first signal has at least one of following functions:

triggering backscatter communication;
scheduling backscatter communication; and
carrying indicating information of time domain resource(s) for performing backscatter communication.

**68.** The method of claim 66 or 67, further comprising:
monitoring, by the network device, backscatter communication on the one or more backscatter time domain resources associated with the first signal.

**69.** The method of claim 68, wherein the one or more backscatter time domain resources associated with the first signal are located after the first signal time domain resource where the first signal is located, and/or overlap with a location of the first signal time domain resource where the first signal is located.

**70.** The method of claim 68, wherein

the first signal time domain resource where the first signal is located overlaps with one or more backscatter time domain resources associated with another first signal; or
the first signal time domain resource where the first signal is located does not overlap with one or more backscatter time domain resources associated with another first signal.

**71.** The method of any one of claims 68 to 70, wherein a time interval between the first signal time domain resource where the first signal is located and a backscatter time domain resource associated with the first signal is a time domain offset, and a unit of the time domain offset comprises: microseconds, milliseconds, seconds, OFDM symbols, time slots, subframes, frames or basic time units of backscatter communication.

**72.** The method of claim 71, wherein the time domain offset comprises an offset from a first reference point to a second reference point; wherein

the first reference point is associated with the first signal; and
the second reference point is associated with the backscatter time domain resource.

**73.** The method of claim 72, wherein the first reference point comprises at least one of: a starting point of the first signal, an end point of the first signal, a starting point of a time unit where the first signal is located, and an end point of the time unit where the first signal is located.

**74.** The method of claim 72 or 73, wherein the second reference point comprises at least one of: a starting point of the backscatter time domain resource, an end point of the backscatter time domain resource, a starting point of a time unit where the backscatter time domain resource is located, and an end point of the time unit where the backscatter time domain resource is located.

**75.** The method of claim 73 or 74, wherein a time unit comprises OFDM symbols, time slots, subframes, frames, or basic time units of backscatter communication.

**76.** The method of any one of claims 71 to 75, wherein time domain offsets corresponding to all first signals are configured uniformly or independently.

**77.** The method of any one of claims 72 to 76, wherein the first signal is associated with one backscatter time domain resource or a plurality of backscatter time domain resources.

**78.** The method of claim 77, wherein an association relationship between the first signal and the backscatter time domain resource is determined by a time domain offset.

**79.** The method of claim 78, wherein an association relationship between the first signal and the plurality of backscatter time domain resources is determined by one or more time domain offsets.

**80.** The method of claim 79, wherein in a case where the association relationship between the first signal and the plurality of backscatter time domain resources is determined by a plurality of time domain offsets, each time domain offset is used to determine a backscatter time domain resource associated with the first signal.

**81.** The method of claim 77, wherein the association relationship between the first signal and the plurality of backscatter time domain resources is determined by a time domain offset and a number of the backscatter time domain resource(s) associated with the first signal.

**82.** The method of claim 77, wherein the association relationship between the first signal and the plurality of backscatter time domain resources is determined by a time domain offset, a number of the backscatter time domain resource(s) associated with the first signal, and an interval between two adjacent backscatter time domain resources associated with the first signal.

**83.** The method of claim 82, further comprising: configuring, by the network device, the time domain offset, the number of the backscatter time domain resources associated with the first signal or the interval between two adjacent backscatter time domain resources associated with the first signal.

**84.** The method of claim 83, wherein the network device configures the time domain offset, the number of the backscatter time domain resources associated with the first signal or the interval between two adjacent backscatter time domain resources associated with the first signal through the first signal.

**85.** The method of any one of claims 66 to 84, wherein a format of the first signal comprises at least one of a first format, a second format and a third format, wherein

the first signal in the first format is associated with one or more backscatter time domain resources;
the first signal in the second format is associated with a backscatter time domain resource; and
the first signal in the third format is associated with a plurality of backscatter time domain resources.

**86.** The method of any one of claims 66 to 85, wherein backscatter time domain resources associated with different first signals are completely identical, completely different or partially identical.

**87.** The method of any one of claims 66 to 86, wherein durations of different backscatter time domain resources are same or different.

**88.** The method of claim 66 or 67, wherein sending, by the network device, the first signal on the first signal time domain resource, comprises:

determining, by the network device, the first signal time domain resource in a first time domain resource set based on a UE ID of a terminal device that needs to communicate, and sending, by the network device, the first signal on the first signal time domain resource; or
determining, by the network device, the first signal time domain resource in a first time domain resource set based on a UE ID and a cell ID of a terminal device that needs to communicate, and sending, by the network device, the first signal on the first signal time domain resource; or
determining, by the network device, the first signal time domain resource in a first time domain resource set based on a group identification of a terminal device that needs to communicate, and sending, by the network device, the first signal on the first signal time domain resource; or
determining, by the network device, the first signal time domain resource in a first time domain resource set based on a group identification and a cell ID of a terminal device that needs to communicate, and sending, by the network device, the first signal on the first signal time domain resource.

**89.** The method of any one of claims 66 to 88, further comprising: configuring, by the network device, a number of the backscatter time domain resource(s) associated with the first signal.

**90.** The method of claim 89, wherein the network device configures the number of the backscatter time domain resource(s) associated with the first signal through the first signal.

**91.** The method of any one of claims 66 to 90, further comprising: configuring, by the network device, an association rule between the first signal and the backscatter time domain resource(s).

**92.** The method of claim 91, wherein the association rule is represented by a bitmap.

**93.** The method of claim 92, wherein the bitmap comprises M1 bits; each bit corresponds to X1 backscatter time domain resources or X1 basic communication units in a first time domain resource set where the first signal time domain resource is located; or one bit of the bitmap corresponds to Y1 backscatter time domain resources or Y1 basic communication units in the first time domain resource set where the first signal time domain resource is located, and each bit in remaining bits of the bitmap corresponds to X1 backscatter time domain resources or X1 basic communication units in the first time domain resource set where the first signal time domain resource is located; a relationship between the M1 and the X1 satisfies M1=T1/X1,

$M1=\lceil T1/X1 \rceil$, or $M1=\lfloor T1/X1 \rfloor$, wherein the

T1 represents a number of backscatter time domain resources or a number of basic communication units that satisfy a third condition in the first time domain resource set where the first signal time domain resource is located.

**94.** The method of claim 93, wherein the third condition comprises:

being located at any location in the first time domain resource set where the first signal time domain resource is located; or
being located in the first time domain resource set where the first signal time domain resource is located and after the first signal time domain resource; or
being located in the first time domain resource set where the first signal time domain resource is located, and located after the first signal time domain resource or overlapping with the first signal time domain resource.

**95.** The method of claim 92, wherein
the bitmap comprises M2 bits, and each bit corresponds to X2 basic communication units or X2 backscatter time domain resources; the X2 or the M2 is a positive integer.

**96.** The method of claim 92, wherein
the bitmap comprises M3 bits; each bit corresponds to X3 backscatter time domain resources or X3 basic communication units; or one bit of the bitmap corresponds to Y3 backscatter time domain resources or Y3 basic communication units, and each bit in remaining bits of the bitmap corresponds to X3 backscatter time domain resources or X3 basic communication units; a relationship between the M3 and the X3 satisfies M3=T3/X3, $M3=\lceil T3/X3 \rceil$, or

$M3=\lfloor T3/X3 \rfloor$, wherein the T3 represents a number of backscatter time domain resources or a number of basic communication units that satisfy a fourth condition in K first time domain resource sets, and K is a positive integer.

**97.** The method of claim 96, wherein the T3 represents a number of backscatter time domain resources or a number of basic communication units that satisfy the fourth condition in K consecutive first time domain resource sets; or
the T3 represents a number of backscatter time domain resources or a number of basic communication units that satisfy the fourth condition in K consecutive first time domain resource sets containing the backscatter time domain resources.

**98.** The method of claim 96 or 97, wherein the fourth condition comprises:

being located at any location in the K first time domain resource sets; or
being located in the K first time domain resource sets and located after the first signal time domain resource; or
being located in the K first time domain resource sets and located after the first signal time domain resource or overlapping with the first signal time domain resource.

**99.** The method of any one of claims 66 to 98, further comprising:
configuring, by the network device, a second time domain resource set, the second time domain resource set comprising a plurality of first time domain resource sets.

**100.** The method of claim 99, wherein the network device configures the second time domain resource set through the first signal.

**101.** The method of any one of claims 81 to 84, 89 and 90, wherein

numbers of backscatter time domain resources associated with all first signal time domain resources are configured independently; or
numbers of backscatter time domain resources associated with all first signal time domain resources in each first time domain resource set are configured uniformly.

**102.** The method of any one of claims 88 and 96 to 101, wherein

a backscatter time domain resource associated with the first signal time domain resource is located after the first signal time domain resource; or
a backscatter time domain resource associated with the first signal time domain resource is located after the first signal time domain resource or overlaps with the first signal time domain resource.

**103.** The method of any one of claims 88 and 96 to 101, wherein the first time domain resource set comprises one or more first signal time domain resources.

**104.** The method of any one of claims 88 and 96 to 101, wherein the first time domain resource set comprises one or more backscatter time domain resources.

**105.** The method of any one of claims 88 and 96 to 104, further comprising: sending, by the network device, location information of first signal time domain resources and/or backscatter time domain resources in the first time domain resource set; wherein the location information comprises a starting location and/or a duration.

**106.** The method of claim 105, wherein first time domain resource sets comprise first-type first time domain resource sets and second-type first time domain resource sets, the first-type first time domain resource sets are each a first time domain resource set comprising first signal time domain resources and/or backscatter time domain resources, and the second-type first time domain resource sets are each a first time domain resource set comprising neither first signal time domain resources nor backscatter time domain resources; and the location information of the first signal time domain resources and/or the backscatter time domain resources in the first time domain resource set comprises:

distribution information of the first signal time domain resources and/or backscatter time domain resources in a first-type first time domain resource set; and/or periodic distribution information of the first-type first time domain resource sets and the second-type first time domain resource sets, each period comprising at least one first-type first time domain resource set and/or at least one second-type first time domain resource set.

**107.** The method of any one of claims 88, and 96 to 106, wherein patterns of different first time domain resource sets are same or different; and a pattern comprises distribution information of first signal time domain resources and/or backscatter time domain resources in the first time domain resource set.

**108.** The method of any one of claims 85 and 96 to 107, wherein

all first signal time domain resources in the first time domain resource set are located before any backscatter time domain resource in the first time domain resource set; or the first time domain resource set comprises a first signal time domain resource that is located after a backscatter time domain resource in the first time domain resource set; or the first time domain resource set comprises a first signal time domain resource and a backscatter time domain resource that occupy a same basic communication unit.

**109.** The method of any one of claims 94 to 97, wherein basic communication units are component units of the first time domain resource set; and the first time domain resource set is determined based on a number of the basic communication units and/or a time duration of a basic communication unit.

**110.** The method of any one of claims 66 to 109, wherein backscatter time domain resources associated with different first signal time domain resources are completely identical, completely different or partially identical.

**111.** The method of any one of claims 88 and 96 to 108, wherein different first signal time domain resources in a same first time domain resource set are allowed to a same first signal.

**112.** The method of any one of claims 68 to 84, wherein the backscatter time domain resource(s) comprise backscatter communication occasions.

**113.** The method of any one of claims 66 to 111, wherein the first signal time domain resource comprises a first signal transmitting occasion.

**114.** A terminal device, comprising:

a processing module configured to determine one or more backscatter time domain resources associated with a received first signal; and a backscatter module configured to perform backscatter communication based on the one or more backscatter time domain resources.

**115.** A network device, comprising:
a sending module configured to send a first signal on a first signal time domain resource, the first signal being associated with one or more backscatter time domain resources.

**116.** A terminal device, comprising: a processor and a memory, wherein the memory is configured to store a computer program, and the processor is configured to call and run the computer program stored in the memory to cause the terminal device to perform the method of any one of claims 1 to 65.117. A network device, comprising: a processor and a memory, wherein the memory is configured to store a computer program, and the processor is configured to call and run the computer program stored in the memory to cause the network device to perform the method of any one of claims 66 to 113.

**118.** A chip, comprising: a processor configured to call and run a computer program from a memory to cause a device equipped with the chip to perform the method of any one of claims 1 to 65.

**119.** A chip, comprising: a processor configured to call and run a computer program from a memory to cause a device equipped with the chip to perform the method of any one of claims 66 to 113.

**120.** A computer-readable storage medium, configured to store a computer program, wherein the computer program, when executed by a device, causes the device to perform the method of any one of claims 1 to 65.

**121.** A computer-readable storage medium, configured to store a computer program, wherein the computer program, when executed by a device, causes the device to perform the method of any one of claims 66 to 113.

**122.** A computer program product, comprising computer program instructions, wherein the computer program instructions cause a computer to perform the method of any one of claims 1 to 65.

**123.** A computer program product, comprising computer program instructions, wherein the computer program instructions cause a computer to perform the method of any one of claims 66 to 113.

**124.** A computer program, causing a computer to perform the method of any one of claims 1 to 65.

**125.** A computer program, causing a computer to perform the method of any one of claims 66 to 113.

**126.** A communication system, comprising:

a terminal device configured to perform the method of any one of claims 1 to 65; and
a network device configured to perform the method of any one of claims 66 to 113.

Charge/Trigger

Backscatter communication

Reader/Writer

Tag

Power harvesting module

Backscatter communica-tion module

Low-power comput-ing module

Sensor module

FIG. 1

Backscatter reader/writer

Carrier

Backscatter tag

TX

AMP

RX

LNA

Logic process-ing

Power harvesting

Backscatter signal

FIG. 2

| | |
|---|---|
| determining, by a terminal device, one or more backscatter time domain resources associated with a received first signal | S310 |
| performing, by the terminal device, backscatter communication based on the one or more backscatter time domain resources | S320 |

FIG. 3

BCO1

BCO2

BO1

BO2

T1

T2

Time

☰ Scheduling signal transmitting/monitoring occasion
BackScatter control occasion (BCO)

▨ Backscatter communication occasion
BackScatter occasion (BO)

FIG. 4A

FIG. 4B

FIG. 4C

FIG. 4D

FIG. 4E

First time domain resource set

Scheduling signal
transmitting occasion

Backscatter communication
occasion

FIG. 5A

First time domain resource set 1     First time domain resource set 2     First time domain resource set 3

Scheduling
signal
transmitting
occasion

Backscatter communication occasion

FIG. 5B

First time domain resource set

Scheduling signal
transmitting occasion

Backscatter communication
occasion

FIG. 5C

First time domain resource set

Scheduling signal
transmitting occasion

Backscatter communication
occasion

FIG. 5D

Second time domain resource set

First time domain resource set     First time domain resource set

Scheduling signal transmitting
occasion

Backscatter communication occasion

FIG. 5E

First time domain resource set

Scheduling signal
transmitting occasion

Backscatter communication
occasion

FIG. 6A

Scheduling signal transmitting occasion

Backscatter communication occasion

Second time domain resource set

First time domain resource set

First time domain resource set

FIG. 6B

First time domain resource set

Scheduling signal
transmitting occasion

Backscatter communication
occasion

FIG. 6C

First time domain resource set

Scheduling signal
transmitting occasion

Backscatter
communication occasion

FIG.6D

First time domain resource set

| 1010 | | 0101 | | | | | |

Scheduling signal
transmitting occasion

Backscatter
communication occasion

FIG. 6E

First time domain resource set

| 1010 | | 0101 | | | | | |

Scheduling signal
transmitting occasion

Backscatter
communication occasion

FIG. 6F

First time domain resource set

1010    0101

□ Scheduling signal transmitting occasion    ▨ Backscatter communication occasion

FIG. 7A

First time domain resource set

1010    0101

□ Scheduling signal transmitting occasion    ▨ Backscatter communication occasion

FIG. 7B

First time domain resource set

1010    0101

□ Scheduling signal transmitting occasion    ▨ Backscatter communication occasion

FIG. 7C

First time domain resource set

1010    0101

□ Scheduling signal transmitting occasion    ▨ Backscatter communication occasion

FIG.7D

First time domain resource set

1010    0101

□ Scheduling signal transmitting occasion    ▨ Backscatter communication occasion

FIG. 7E

First time domain resource set

0000 1001 00    0000 0010 01

□ Scheduling signal transmitting occasion    ▨ Backscatter communication occasion

FIG. 7F

800

Sending, by a network device, a scheduling signal on a scheduling signal time
domain resource, the scheduling signal being associated with one or more
backscatter time domain resources

S810

FIG. 8

Terminal device 900

Processing module 910

Backscatter module 920

FIG. 9

Network device 1000

Sending module 1010

FIG.10

Communication device1100

Memory
1120

Processor
1110

Transceiver1130

FIG.11

Chip 1200

Input
interface
1230

Processor
1210

Memory
1220

Outout
interface
1240

FIG.12

Communication system 1300

1310

Terminal
device

Network
device

1320

FIG.13

## INTERNATIONAL SEARCH REPORT

| International application No. |
| --- |
| **PCT/CN2022/081037** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W; H04Q7/-; H04M; H04L; H04B

Documentation searched other than minimum documentation to the extent that such documents are included in the fields searched

Electronic data base consulted during the international search (name of data base and, where practicable, search terms used)

CNTXT, CNABS, CNKI, WPABS, VEN, USTXT, WOTXT, EPTXT, 3GPP: 反向, 背向, 后向, 散射, 时域, 资源, 配置, 分配, 冲突, 干扰, 映射, 关联, 零功耗, 射频识别, 标签, backscatter, time, resource, configur+, allocat+, RFID, tag

**C. DOCUMENTS CONSIDERED TO BE RELEVANT**

| Category* | Citation of document, with indication, where appropriate, of the relevant passages | Relevant to claim No. |
| --- | --- | --- |
| X | CN 113922937 A (CHINA ACADEMY OF INFORMATION AND COMMUNICATIONS TECHNOLOGY) 11 January 2022 (2022-01-11) description, paragraphs [0070]-[0211], and figures 1-13 | 1-126 |
| X | CN 113891356 A (CHINA ACADEMY OF INFORMATION AND COMMUNICATIONS TECHNOLOGY) 04 January 2022 (2022-01-04) description, paragraphs [0053]-[0182], and figures 1-10 | 1-126 |
| A | CN 113207174 A (XIDIAN UNIVERSITY) 03 August 2021 (2021-08-03) entire document | 1-126 |
| A | CN 113746505 A (ROBERT BOSCH CO., LTD.) 03 December 2021 (2021-12-03) entire document | 1-126 |
| A | Huawei et al. ""RP-212135"" *3GPP tsg_ran\tsg_ran*, 07 September 2021 (2021-09-07), entire document | 1-126 |

☐ Further documents are listed in the continuation of Box C. ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 November 2022** | **29 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/081037**

| Patent document cited in search report | | | Publication date (day/month/year) | Patent family member(s) | | | Publication date (day/month/year) |
|---|---|---|---|---|---|---|---|
| CN | 113922937 | A | 11 January 2022 | None | | | |
| CN | 113891356 | A | 04 January 2022 | None | | | |
| CN | 113207174 | A | 03 August 2021 | None | | | |
| CN | 113746505 | A | 03 December 2021 | JP | 2021191005 | A | 13 December 2021 |
| | | | | DE | 102021205165 | A1 | 02 December 2021 |
| | | | | US | 2021378037 | A1 | 02 December 2021 |

Form PCT/ISA/210 (patent family annex) (January 2015)